(19) **Europäisches Patentamt / European Patent Office / Office européen des brevets**

(11) **EP 4 132 181 A1**

(12) **EUROPEAN PATENT APPLICATION**
published in accordance with Art. 153(4) EPC

(43) Date of publication:
**08.02.2023 Bulletin 2023/06**

(21) Application number: **21776094.1**

(22) Date of filing: **26.03.2021**

(51) International Patent Classification (IPC):
*H04W 72/12* (2009.01)    *H04W 72/04* (2009.01)
*H04W 72/10* (2009.01)    *H04L 5/00* (1968.09)
*H04B 17/373* (2015.01)    *H04B 7/024* (2017.01)
*H04B 7/06* (1968.09)

(52) Cooperative Patent Classification (CPC):
**H04B 7/024; H04B 7/06; H04B 17/373; H04L 5/00; H04W 72/04; H04W 72/12; H04W 72/56; Y02D 30/70**

(86) International application number:
**PCT/KR2021/003758**

(87) International publication number:
**WO 2021/194295 (30.09.2021 Gazette 2021/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 27.03.2020   KR 20200037487
06.04.2020   KR 20200041657
31.12.2020   KR 20200189226

(71) Applicant: **LG Electronics, Inc.**
**Yeongdeungpo-gu**
**Seoul 07336 (KR)**

(72) Inventors:
• **KIM, Kyuseok**
  **Seoul 06772 (KR)**
• **KIM, Hyungtae**
  **Seoul 06772 (KR)**
• **KIM, Seonwook**
  **Seoul 06772 (KR)**
• **SEO, Inkwon**
  **Seoul 06772 (KR)**
• **YANG, Suckchel**
  **Seoul 06772 (KR)**
• **KANG, Jiwon**
  **Seoul 06772 (KR)**

(74) Representative: **Plasseraud IP**
  **66, rue de la Chaussée d'Antin**
  **75440 Paris Cedex 09 (FR)**

(54) **METHOD AND APPARATUS FOR TRANSMITTING AND RECEIVING PHYSICAL DOWNLINK CONTROL CHANNEL (PDCCH) IN WIRELESS COMMUNICATION SYSTEM**

(57) A method and an apparatus for transmitting and receiving a physical downlink control channel (PDCCH) in a wireless communication system are disclosed. A method for receiving a PDCCH according to an embodiment of the present disclosure may comprise the steps of: receiving, from a base station, downlink control information (DCI) for scheduling a physical downlink shared channel (PDSCH) in the PDCCH; receiving the PDSCH from the base station; and transmitting, to the base station, acknowledgment (ACK) information in a physical uplink control channel (PUCCH), in response to the PDSCH. The PDCCH is repeatedly transmitted on a plurality of monitoring locations (MLs), the plurality of MLs are configured based on at least one control resource set (CORESET) and at least one search space set (SS), and a resource of the PUCCH is determined based on information on a control channel element (CCE) in one ML among the plurality of MLs and a PUCCH resource indicator in the DCI.

FIG.30

```
+-------------------------------+
|      Receive DCI on PDCCH     |---- S3001
+-------------------------------+
                |
                v
+-------------------------------+
|         Receive PDSCH         |---- S3002
+-------------------------------+
                |
                v
+-------------------------------+
| Transmit ACK information on PUCCH |---- S3003
+-------------------------------+
```

**Description**

[Technical Field]

The present disclosure relates to a wireless communication system, and in more detail, relates to a method and an apparatus of transmitting and receiving downlink control information, physical downlink control channel (PDCCH) in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus of transmitting and receiving a physical downlink control channel (PDCCH).

In addition, an additional technical object of the present disclosure is to provide a method and an apparatus of transmitting and receiving a PDCCH which is based on multiple TRPs (transmission reception point).

The technical objects to be achieved by the present disclosure are not limited to the above-described technical objects, and other technical objects which are not described herein will be clearly understood by those skilled in the pertinent art from the following description.

[Technical Solution]

A method for receiving a physical downlink control channel (PDCCH) in a wireless communication system according to an aspect of the present disclosure includes: receiving, from a base station, downlink control information (DCI) for scheduling a physical downlink shared channel (PDSCH) in the PDCCH; receiving the PDSCH from the base station; and transmitting, to the base station, acknowledgment (ACK) information in a physical uplink control channel (PUCCH), in response to the PDSCH. The PDCCH is repeatedly transmitted on a plurality of monitoring locations (MLs), the plurality of MLs are configured based on at least one control resource set (CORESET) and at least one search space set (SS), and a resource of the PUCCH is determined based on information on a control channel element (CCE) in one ML among the plurality of MLs and a PUCCH resource indicator in the DCI.

A method for transmitting a physical downlink control channel (PDCCH) in a wireless communication system according to an additional aspect of the present disclosure includes: transmitting, to a terminal, downlink control information (DCI) for scheduling a physical downlink shared channel (PDSCH) in the PDCCH; transmitting the PDSCH to the terminal; and receiving, from the terminal, acknowledgment (ACK) information in a physical uplink control channel (PUCCH), in response to the PDSCH. The PDCCH is repeatedly transmitted on a plurality of monitoring locations (MLs), the plurality of MLs are configured based on at least one control resource set (CORESET) and at least one search space set (SS), and a resource of the PUCCH is determined based on information on a control channel element (CCE) in one ML among the plurality of MLs and a PUCCH resource indicator in the DCI.

[Technical Effects]

According to an embodiment of the present disclosure, by transmitting and receiving PDCCH based on multiple TRP, reliability and robustness for downlink control information transmission/reception may be improved.

In addition, according to an embodiment of the present disclosure, even if the PDCCH is transmitted and received based on the multiple TRP, ambiguity may not occur in determining a resource of a physical uplink control channel (PUCCH) for transmitting and receiving ACK (acknowledgement) information.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of transmitting multiple TRPs in a wireless communication system to which the present disclosure may be applied.

FIG. 8 and FIG. 9 illustrate a method of defining multiple monitoring locations (ML) according to an embodiment of the present disclosure.

FIG. 10 illustrates a frequency resource of a CORESET setting according to an embodiment of the present disclosure.

FIG. 11 illustrates a method of defining multiple monitoring locations (ML) according to an embodiment of the present disclosure.

FIGS. 12 illustrates a method of redefining some resources of a specific monitoring location (ML) according to an embodiment of the present disclosure.

FIG. 13 illustrates an example of defining the size/number/position of a monitoring location candidate (MLC) according to an embodiment of the present disclosure.

FIG. 14 illustrates a method of defining multiple monitoring locations (ML) according to an embodiment of the present disclosure.

FIGS. 15 and 16 illustrate a method of defining multiple monitoring locations (ML) according to an embodiment of the present disclosure.

FIG. 17 illustrates a method of defining multiple monitoring locations (ML) in a time domain according to an embodiment of the present disclosure.

FIG. 18 illustrates a method of defining multiple monitoring locations (ML) in a time domain according to an embodiment of the present disclosure.

FIG. 19 and FIG. 20 illustrate an example in which multiple MLs are defined in a time domain according to an embodiment of the present disclosure.

FIG. 21 illustrates a method of defining multiple monitoring locations (ML) in a time domain based on a window of a specific size according to an embodiment of the present disclosure.

FIG. 22 illustrates a method of defining multiple monitoring locations (ML) in a time domain according to an embodiment of the present disclosure.

FIG. 23 illustrates a method of defining multiple monitoring locations (ML) in a time domain according to an embodiment of the present disclosure.

FIG. 24 and FIG. 25 illustrates a method for resolving collisions between multiple MLs defined in a frequency domain and other channels/signals according to an embodiment of the present disclosure.

FIG. 26 illustrates a method for resolving collisions between multiple MLs defined in a time domain and other channels/signals according to an embodiment of the present disclosure.

FIG. 27 illustrates a method for defining PDCCH candidates according to an embodiment of the present disclosure.

FIG. 28 illustrates a method of defining PDCCH candidates defined in a nested structure according to an embodiment of the present disclosure.

FIG. 29 illustrates a signaling method for PDCCH transmission/reception according to an embodiment of the present disclosure.

FIG. 30 is a diagram illustrating an operation of a terminal in a method for receiving a PDCCH according to an embodiment of the present disclosure.

FIG. 31 is a diagram illustrating an operation of a base station for a method for transmitting a PDCCH according to an embodiment of the present disclosure.

FIG. 32 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

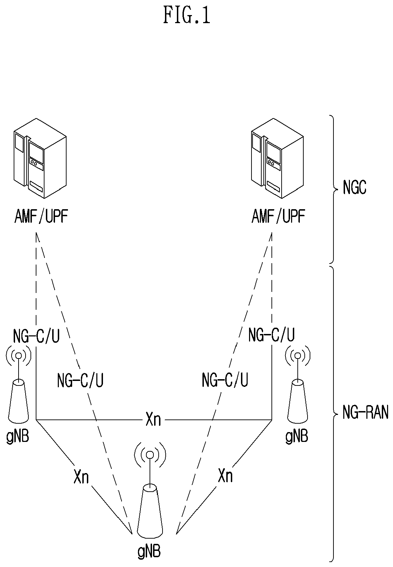

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

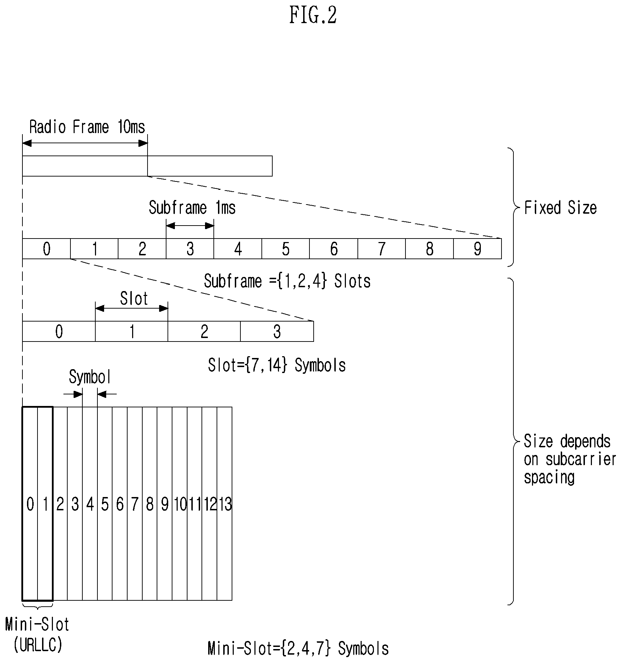

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c=10ms$. Here, a radio frame is configured with 10 subframes having a duration of $T_{sf}=(\Delta f_{max}N_f/1000) \cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^\mu \in \{0,...,N_{slot}^{subframe,\mu}-1\}$ in a subframe and are numbered in an increasing order of $n_{s,f}^\mu \in \{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu=2$ (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

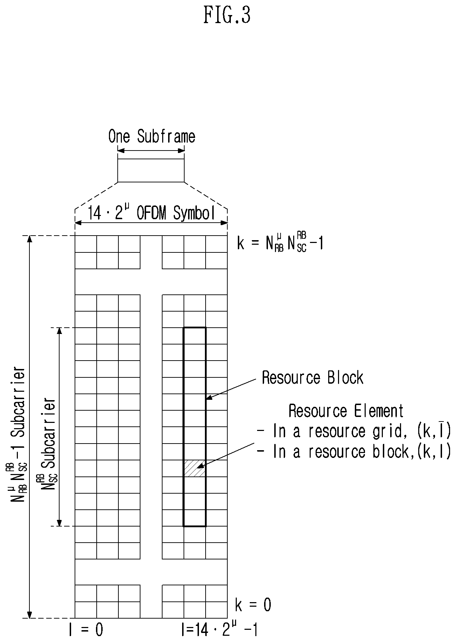

FIG. 3 illustrates a resource grid in a wireless communication system to which the present disclosure may be applied.

In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}^{(\mu)}$ and one or more resource grids configured with $N_{RB}^\mu N_{sc}^{RB}$ subcarriers. Here, $N_{RB}^\mu \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0,...,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

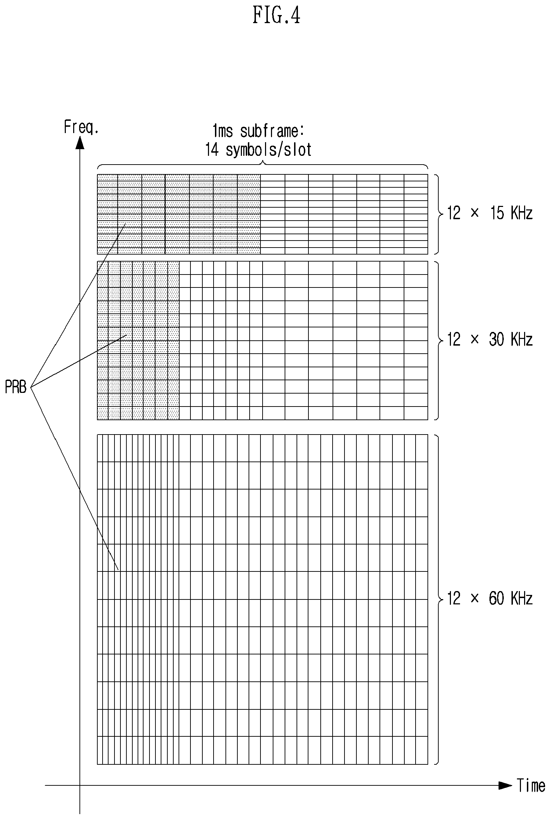

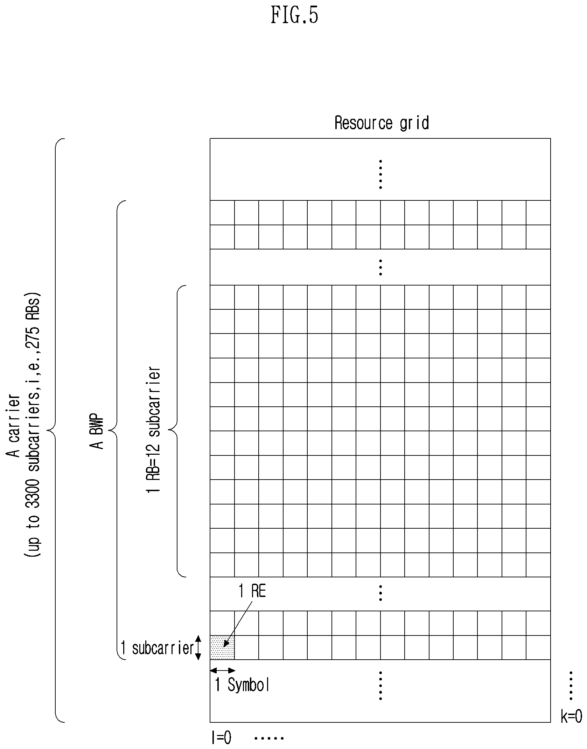

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

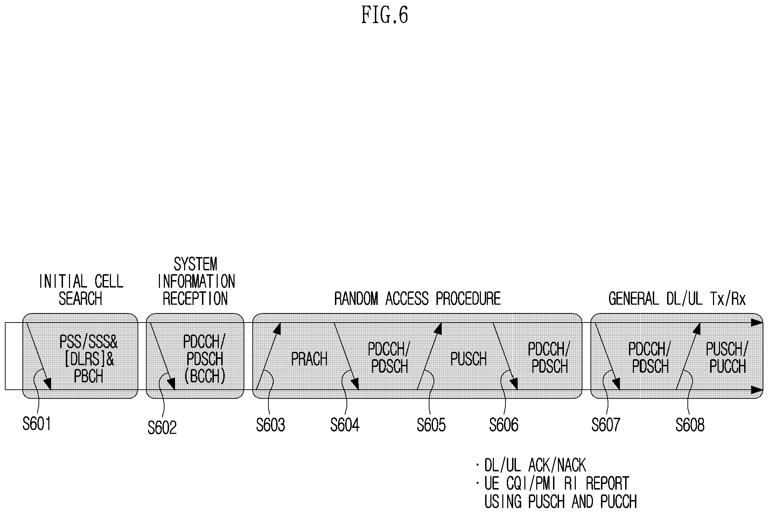

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

Hereinafter, a method for improving reliability in Multi-TRP will be described.

As a transmission and reception method for improving reliability using transmission in a plurality of TRPs, the following two methods may be considered.

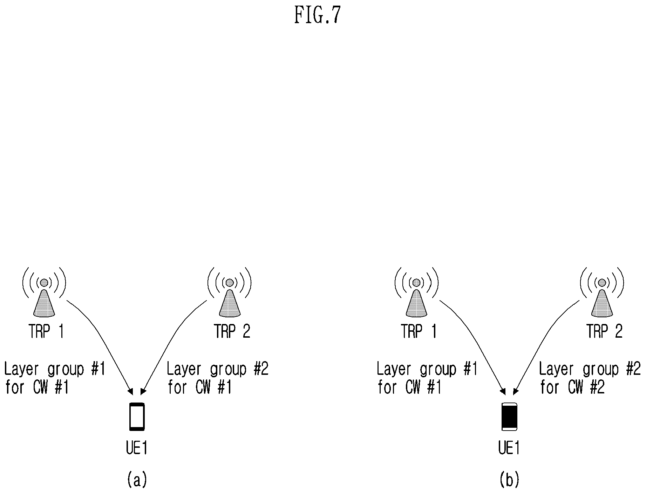

FIG. 7 illustrates a method of multiple TRPs transmission in a wireless communication system to which the present disclosure may be applied.

In reference to FIG. 7 (a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7 (a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

A Method of Transmitting and Receiving PDCCH for supporting multi-TRP (M-TRP) transmission/reception

The Rel-16 standard introduces a PDSCH transmission method based on multi-TRP (multi-TRP), thereby greatly improving the reliability and robustness of PDSCH transmission. On the other hand, in order to improve the reliability/robustness for a PDSCH transmission, the reliability/robustness of a PDCCH which is scheduling it must be essentially guaranteed. The PDCCH may guarantee reliability/robustness based on various aggregation levels (AL) and robust channel coding. Furthermore, in order to support higher reliability/robustness, a PDCCH transmission method based on multi-TRP may be applied. The present disclosure proposes a PDCCH transmission method based on multi-TRP in order to support higher reliability/robustness. However, for convenience of description, in the present disclosure, multi-TRP transmission is considered together, but the proposed method may not be limited to only multi-TRP transmission, and may be applied to single TRP or the like.

In the present disclosure, to support higher reliability/robustness during a PDCCH transmission, a method of configuring a resource, a method for configuring a QCL RS (s) (and/or TCI state(s)) for each resource, etc. are proposed

In order to transmit a PDCCH having higher reliability/robustness, it is preferable that a resource region in which the PDCCH is transmitted (or monitored) is first defined. In particular, when multi-TRP transmission is assumed, a resource region in which a PDCCH corresponding to each TRP is transmitted (or monitored) is preferably defined. In this specification, a resource region in which such a PDCCH is transmitted (or monitored) is referred to as a monitoring location (ML).

In the present disclosure, the ML may be interpreted as a PDCCH transmission (or monitoring) region in which DCI may be transmitted based on repetition/fraction. Here, the MLs may correspond to different QCL RS(s) (/TCI state(s)), respectively, or may correspond to the same QCL RS(s) (/TCI state(s)).

When a plurality of PDCCHs are transmitted through different MLs, a repeated transmission method (repetition) corresponding to each PDCCH corresponding to the same DCI may be applied, and/or a method of dividing and transmitting one DCI information (fraction) may be applied. The repetition and fraction methods described above are as follows.

- Repetition: for different MLs, based on a PDCCH transmission resource in the ML (which may be based on the same or different MLs) and the same DCI, a method for transmitting each (or , the same) encoded bits in each ML after channel coding

For example, a base station may generate encoded bits based on the PDCCH transmission resource in ML1 (e.g., PDCCH candidate #x in the aggregation level (AL) #y) and DCI1, and then the base station may transmit the corresponding bits using the PDCCH transmission resource in ML1. In addition, the base station may generate encoded bits based on the PDCCH transmission resource in ML2 (or may be based on the PDCCH transmission resource in ML1) and DCI1 (meaning the same DCI as above), and then the base station may transmit the corresponding bits using the PDCCH transmission resource in ML2.

- Fraction: For different MLs, based on a plurality of PDCCH transmission resources in different MLs and single DCI, a method for transmitting a part of the encoded bits through a ML1, and a remaining part through ML2, after channel coding.

For example, a PDCCH transmission resource in ML1 (e.g., PDCCH candidate #x in AL #y) and a PDCCH transmission resource in ML2 (e.g., PDCCH candidate #x' in AL #y') may be assumed as a entire transmission resource. The base station may generate encoded bits based on the entire transmission resource and DCI1, and then the base station may transmit a part of the bits through ML1 and a remaining part through ML2.

As another example, the base station may generate encoded bits based on a PDCCH transmission resource in a specific ML among a plurality of MLs (e.g., PDCCH candidate #x in AL #y in ML1) and DCI1, and then the base station may transmit a part of the bits through ML1 and a remaining part through ML2. Here, for single encoded bits, transmission for each ML may be performed through rate matching based on repeated transmission in a circular buffer.

When a plurality of PDCCHs are transmitted through different MLs, a specific method among the repetition/fraction methods may be applied. Here, this may be defined as a fixed rule, or L1/L2 signaling for the base station to select a specific method to the terminal may be applied/used.

On the other hand, in accordance with the proposed method below, a plurality of MLs may be defined based on a single/multiple CORESET (control resource set) configuration and a single/multiple search space set (SS) configuration (i.e., i) a single CORESET configuration and a single SS configuration, or ii) a single CORESET configuration and multiple SS configurations, iii) multiple CORESET configurations and a single SS configuration, iv) multiple CORESET configurations and multiple SS configurations). Here, it can be applied to each ML as follows.

**[0097]** - A hash function can be applied independently. Here, the hash function may mean a hash function for finding a start control channel element (CCE) of a specific PDCCH candidate in a specific AL. Equation 3 below exemplifies the hash function of Rel-15. For a search space set s to which CORESET p is connected, the CCE index for the PDCCH candidate $m_{s,n\_CI}$ of the aggregation level (AL) L of the search space set in a slot $n_{s,f}^{u}$ for an activated DL BWP of a serving cell corresponding to a carrier indicator field n_CI($n_{CI}$) may be determined based on the hash function of Equation 3 below. In Equation 3, CSS refers to a common search space, and USS refers to a UE specific search space. i=0,...,L-1. $N_{CCE,p}$ is the number of CCEs in CORESET p, and is numbered from 0 to $N_{CCE,p}$-1. When the PDCCH is configured as a carrier indicator field by a parameter for cross-carrier scheduling configuration (i.e., CrossCarrierSchedulingConfig) for a monitored serving cell, n_CI($n_{CI}$) is a carrier indicator field value. Otherwise, for any CSS, n_CI=0. $m_{s,n\_CI}$=0,...,$M_{s,n\_CI}^{(L)}$-1. Here, $M_{s,n\_CI}^{(L)}$ is the number of PDCCH candidates configured to be monitored by the UE for the aggregation level L of the search space set s for the serving cell corresponding to n_CI($n_{CI}$). For any CSS, $M_{s,max}^{(L)}$=$M_{s,0}^{(L)}$. For USS, $M_{s,max}^{(L)}$ is the maximum value of $M_{s,n\_CI}^{(L)}$ over all configured n_CI($n_{CI}$) values for the CCE aggregation level L of the search space set s. The RNTI used for $n_{RNTI}$ is C-RNTI; and/or,

[Equation 3]

$$L \cdot \left\{ \left( Y_{p,n_{s,f}^{\mu}} + \left\lceil \frac{m_{s,n_{CI}} \cdot N_{\text{CCE},p}}{L \cdot M_{s,\max}^{(L)}} \right\rceil + n_{CI} \right) mod \left\lfloor N_{\text{CCE},p}/L \right\rfloor \right\} + i$$

$$- \text{CSS: } Y_{p,n_{s,f}^{\mu}} = 0;$$

$$- \text{USS,:} Y_{p,n_{s,f}^{\mu}} = \left( A_p \cdot Y_{p,n_{s,f}^{\mu}-1} \right) mod D, \ Y_{p,-1} = n_{\text{RNTI}} \neq 0, \ A_p = 39827 \ (pmod3 = 0),$$

$$A_p = 39829 \ (pmod3 = 1), \ A_p = 39839 \ (pmod3 = 2), \ D = 65537;$$

- different QCL RS(s)(/TCI state(s)) may correspond; and/or;
- different PDCCH scrambling sequence/PDCCH DMRS scrambling sequence may be applied; and/or;
- A parameter of a CORESET configuration may be equally applied. (However, some parameters may be an exception. Applied TCI state/frequency domain resources (i.e., frequencyDomainResources)/PDCCH DMRS scrambling identifier (i.e., pdcch-DMRS-ScramblingID), etc.)

Meanwhile, in order to reduce the DCI decoding complexity of the terminal for the PDCCH transmission resource on which repetition/fraction transmission is performed in different MLs, the following method may be applied.

- The UE may perform blind detection (BD) only on PDCCH candidates having the same AL and/or the same PDCCH candidate index in different MLs. For example, when the UE may perform BD only on PDCCH candidates of the same AL, the UE may perform BD only on a combination of the PDCCH candidates defined in AL #x of ML1 and PDCCH candidates defined in AL #x of ML2. In addition, when the UE may perform BD only on PDCCH candidates having the same AL and the same PDCCH candidate index, the UE may perform BD only on a combination of PDCCH candidate #y defined in AL #x of ML1 and PDCCH candidate #y defined in AL #x of ML2. Also, when the UE may perform BD only on PDCCH candidates having a PDCCH candidate index, the UE may perform BD only on a combination of PDCCH candidate #y of ML1 and PDCCH candidate #y of ML2.

Meanwhile, when a (PDCCH transmission) resource in which repetition/fraction transmission is performed in different ML,

- has a different total number of CCEs
- has a different AL; and/or
- has a different PDCCH candidate index (and/or a different CCE index corresponding to the same PDCCH candidate index); and/or
- has a different hash function (and/or parameter(s) for the hash function),

A method for determining a single PUCCH resource from a PUCCH resource indicator indicated by PDCCHs transmitted through different MLs needs to be defined.

Currently, in TS 38.213, a method for determining a PUCCH resource is defined as follows.

For the first set of PUCCH resources, when the size $R_{\text{PUCCH}}$ of the resource list (i.e., higher layer parameter resourceList) is greater than 8, among DCI format 1_0 or DCI format 1_1 having value of a field indicating the same slot for PUCCH transmission (i.e., 'PDSCH-to-HARQ_feedback) timing indicator' field), when the UE provides HARQ-ACK in PUCCH transmission in response to detection of the last DCI format 1_0 or DCI format 1_1 in one PDCCH reception, the UE determines the PUCCH resource with the index $r_{\text{PUCCH}}$ ($0 \leq r_{\text{PUCCH}} \leq R_{\text{PUCCH}}-1$) as shown in Equation 4 below.

[Equation 4]

$$r_{\text{PUCCH}} = \begin{cases} \left\lfloor \dfrac{n_{\text{CCE},p} \cdot \left\lceil R_{\text{PUCCH}}/8 \right\rceil}{N_{\text{CCE},p}} \right\rfloor + \Delta_{\text{PRI}} \cdot \left\lceil \dfrac{R_{\text{PUCCH}}}{8} \right\rceil & \text{if} \quad \Delta_{\text{PRI}} < R_{\text{PUCCH}} \bmod 8 \\[4mm] \left\lfloor \dfrac{n_{\text{CCE},p} \cdot \left\lfloor R_{\text{PUCCH}}/8 \right\rfloor}{N_{\text{CCE},p}} \right\rfloor + \Delta_{\text{PRI}} \cdot \left\lfloor \dfrac{R_{\text{PUCCH}}}{8} \right\rfloor + R_{\text{PUCCH}} \bmod 8 & \text{if} \quad \Delta_{\text{PRI}} \geq R_{\text{PUCCH}} \bmod 8 \end{cases}$$

In Equation 4, $N_{\text{CCE},p}$ is the number of CCEs in CORESET p of PDCCH reception for DCI format. $n_{\text{CCE},p}$ is an index of the first CCE for PDCCH reception. $\Delta_{\text{PRI}}$ is the value of the PUCCH resource indicator (PUCCH resource indicator) field in the DCI format. If the DCI format does not include a PUCCH resource indicator (PUCCH resource indicator) field, $\Delta_{\text{PRI}}=0$.

The present disclosure proposes a method for determining a PUCCH resource from PDCCHs transmitted through different MLs as follows.

The method proposed below mainly describes a case in which a plurality of MLs are defined based on a single search space set (SS) configuration and a single CORESET configuration, but the proposed method of the present disclosure is not limited thereto. Even when multiple MLs are defined based on single/multiple CORESET configuration(s) and single/multiple SS configuration(s), the following proposed method is also applicable.

In order to determine a single PUCCH resource from the PUCCH resource indicator field indicated by the PDCCHs (by the DCI transmitted through the PDCCH) transmitted through different MLs, the following method may be applied.

- $N_{\text{CCE},p}$ may mean the total number of CCEs corresponding to 'specific ML'; and/or
- $n_{\text{CCE},p}$ may mean the first CCE index corresponding to the PDCCH candidate received in 'specific ML'; and/or
- $\Delta_{\text{PRI}}$ (in the case of repetition transmission), the UE may expect that DCIs corresponding to PDCCHs received in different MLs have the same value.

The 'specific ML' may be defined as a fixed rule between the base station and the terminal, and/or may be configured/instructed by the base station to the terminal through L1/L2 signaling.

Alternatively, the 'specific ML' may be determined as follows.

- The 'specific ML' may be determined based on a time resource for multiple MLs (e.g., ML transmitted in earlier symbol/ML transmitted first/ML transmitted last/ML transmitted in/to later symbol, etc.) and/or a frequency resource (e.g., ML transmitted on/to lower subcarrier/lowest subcarrier/highest subcarrier/higher subcarrier); and/or;
- The 'specific ML' may be determined based on a TCI state corresponding to multiple MLs (e.g., ML corresponding to the first/second TCI state, or ML having the same TCI state as the TCI state of CORESET); and/or;
- The 'specific ML' may be determined based on an index (e.g., lowest/highest index) of a PDCCH candidate for multiple MLs; and/or;
- The 'specific ML' may be determined based on an index (e.g., lowest/highest index) of the ML; and/or;
- The 'specific ML' may be determined as a ML corresponding to a CORESET associated with a SS configuration.

Alternatively, the 'specific ML' may be determined as follows.

- The 'specific ML' may be determined based on a CORESET identifier (CORESET ID) (e.g., lowest/highest CORESET ID) corresponding to multiple MLs.
- The 'specific ML' may be determined based on a search space set ID (e.g., lowest/highest search space set ID) corresponding to multiple MLs.

Here, $n_{\text{CCE},p}$ may be determined based on the lowest CCE index of a PDCCH having a specific search space set ID (e.g., lowest/highest search space set ID) based on the search space set ID (i.e., the 'specific ML').

In addition, $N_{\text{CCE},p}$ may be determined based on the number of CCEs in CORESET associated with the 'specific search space set ID'. (Or, it can be interpreted that $N_{\text{CCE},p}$ is determined based on the number of CCEs in the CORESET corresponding to the 'specific ML' determined based on the above method.)

- The 'specific ML' may be determined based on a CCE index (e.g., lowest/highest CCE index) corresponding to multiple MLs.

Here, based on the CCE index, $n_{CCE,p}$ may be determined based on the lowest CCE index of a PDCCH having a specific CCE index (e.g., lowest/highest CCE index) based on a CCE index (i.e., the 'specific ML').

In addition, $N_{CCE,p}$ may be determined based on the number of CCEs in the CORESET in which the PDCCH having the 'specific CCE index' is transmitted (i.e., the 'specific ML'). (Or, it can be interpreted that $N_{CCE,p}$ is determined based on the number of CCEs in the CORESET associated with the search space ID in which the 'PDCCH(/specific ML)' determined based on the above method is transmitted.)

In addition, when the CCE index corresponding to multiple MLs (i.e., PDCCH) in the proposed method is the same, $n_{CCE,p}$ and/or $N_{CCE,p}$ may be determined based on a CORESET ID/search space set ID corresponding to the ML(s) (e.g., the lowest/highest CORESET ID/search space set ID).

It is obvious that a specific method may be independently applied to the proposed methods, and/or one or more of some methods may be applied in combination.

Although the proposed method has been described separately according to a method in which a plurality of MLs are configured for convenience of description, it is obvious that the proposed method does not limit the applicable situations and may be applied to different cases.

Meanwhile, for convenience of explanation in the present disclosure, a method that may define a plurality of MLs to perform repetition/fraction transmission is mainly described based on (/assuming) a single CORESET configuration and a single search space configuration, however, the configuration method for applying the proposed method is not limited. For example, even when multiple MLs to perform repetition/fraction transmission are defined based on single/multiple CORESET configuration(s) and single/multiple SS configuration(s), the method of defining a plurality of MLs proposed in the present disclosure may be used. For example, when multiple CORESET configurations may be associated with a single SS configuration, each CORESET configuration may correspond to a different ML (proposed in this disclosure).

Method #1: A method of defining/configuring a plurality of monitoring locations (MLs) in a frequency domain, in a manner that repeats a frequency domain of a single CORESET configuration

Method 1 proposes a method in which a plurality of MLs are defined/configured/allocated to the same time resource in a time domain and defined/configured/allocated to different frequency resources in a frequency domain.

Proposal #1: ML(s) in which repetition/fraction transmission is to be made based on an offset value may be configured/indicated/defined.

The ML(s) on which repetition/fraction transmission is to be performed may have the same size in the frequency domain. Here, the size of the ML(s) in the frequency domain may correspond to the size of a frequency resource configured in a specific CORESET (e.g., a CORESET associated with(related to) a SS). This can be equally applied to other examples of defining a plurality of MLs, which will be described later.

The offset (Offset) related information for configuring/indicating/defining a plurality of MLs (e.g., an offset value, a reference point for calculating the start of an offset, etc.) may be defined as a fixed rule between the base station and the terminal or, and/or may be configured/instructed by the base station to the terminal through L1/L2 signaling.

The unit of the offset value defined to configure/indicate the ML(s) may be configured/indicated/defined as the number of a specific resource element (RE)/resource element group (REG)/resource block (RB). The following shows an example of the unit of the offset value.

- Example-1: The unit of the Offset value may be configured/indicated/defined as a multiple of (e.g., ×1 (1 times)/ ×2 (2 times)/ ×3 (3 times), etc.) the frequency resource size configured in a specific CORESET. In this case, it may be assumed that the frequency resource configured in the specific CORESET is a continuous resource. In addition, the size of the frequency resource configured in the specific CORESET may be defined based on the start frequency resource and the last frequency resource. In the above proposal, a 'specific CORESET' may mean a CORESET associated with the SS configuration. At this time, by configuring/indicating a specific offset value through the parameter (s) defined based on the offset unit in the SS configuration, ML(s) for repetition/fraction transmission may be configured/indicated.

Example-2: The unit of the Offset value may be configured/indicated/defined as a multiple of the number of specific RBs (eg, 6RBs) (ie, 6RBs, 12RBs, etc.). Frequency domain resource allocation for CORESET is indicated in accordance with a 6RB grid from a common resource block 0 (CRB0) (i.e., indicated in units of 6RB). Considering interference coordination with other CORESET resources, blocking, etc., it is desirable that the same principle (that is, indicated in multiples of 6RB) be applied even when configuring/indicating/defining multiple MLs.

Based on the above-described offset unit, the following method may be applied to the reference point to which the indicated/configured offset is to be applied.

- Example-1: An offset value may be applied based on a frequency resource position (e.g., a start/last frequency resource position of CORESET) configured in a specific CORESET (e.g., CORESET associated with SS). And, the frequency resource configured in the specific CORESET may correspond to a specific ML.
- Example-2: An offset value may be applied based on the location (and/or RB) of the BWP starting resource.
- Example-2-1: the offset value may be applied based on a starting point of the first unit among the available 6RB units of BWP (i.e., a starting RB of the bit corresponding to the lowest 6RB of the bitmap for configuring a frequency resource location of a specific CORESET (e.g., CORESET associated with SS)). Frequency domain resource allocation for CORESET is directed to a 6RB grid from CRB0 (common resource block 0), considering interference coordination with other CORESET resources, blocking, etc., it may be desirable that the same principle be applied when configuring/instructing/defining multiple MLs. Here, the description of the 6RB unit is only an example in consideration of the unit (and/or grid) of frequency domain resource allocation for CORESET, and does not limit the technical scope of the present disclosure. Accordingly, when frequency domain resource allocation for CORESET of another unit (/grid) is indicated/configured, Example 2-1 may be applied based on the corresponding unit (and/or grid).

According to the above proposal, it is possible to define/configure the unit of the offset value and/or the reference point to which the offset is applied. In addition, a specific offset value(s) may be configured to the UE through higher layer signaling (e.g., SS configuration, etc.). A plurality of MLs associated with the SS configuration may include the frequency resource of the CORESET configuration associated with the SS configuration, and/or may be defined by the size of the frequency resource of the CORESET configuration in the location indicated by the offset value(s).

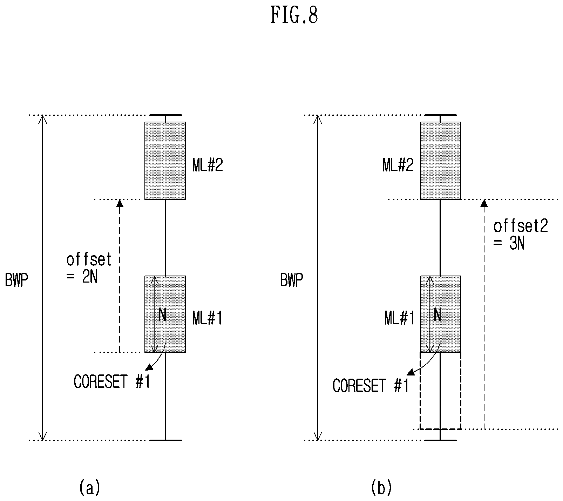

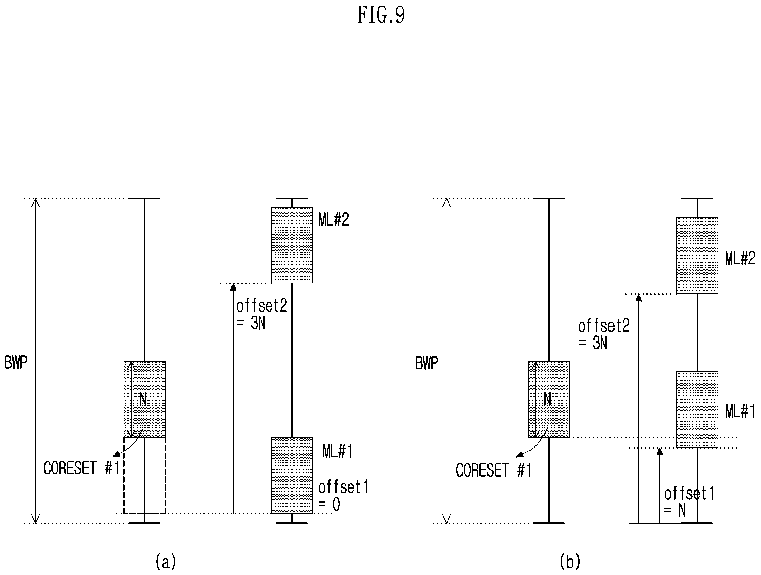

FIG. 8 and FIG. 9 illustrate a method of defining multiple monitoring locations (MLs) according to an embodiment of the present disclosure.

FIG. 8 and FIG. 9 illustrate a method of defining a plurality of MLs according to a unit of an offset value and a reference point to which an offset is to be applied, as described above.

FIG. 8 illustrates an example in which a plurality of MLs including frequency resources of the CORESET configuration associated with the SS configuration are defined. FIG. 8(a) illustrates an example in which Example-1 for an offset unit and Example-1 for an offset reference point are applied. FIG. 8(b) illustrates an example in which Example-1 for an offset unit and Example-2-1 for an offset reference point are applied.

Referring to FIG. 8(a), the frequency resource of the CORESET (specific CORESET) configuration associated with the SS configuration may be defined as ML1. And, by configuring an offset value based on the start point of the frequency resource of the CORESET configuration (e.g., a multiple of the size of the specific CORESET configuration frequency resource (e.g., 2N, N is the size of a specific CORESET configuration frequency resource)), ML2 may be defined. Referring to FIG. 8(b) , a frequency resource of a CORESET configuration associated with a SS configuration (specific CORESET) may be defined as ML1. And, by configuring an offset value based on the starting point of the first unit among the available 6RB units of the BWP (e.g., a multiple of the specific CORESET configuration frequency resource size (e.g., 3N, N is the size of a specific CORESET), ML2 may be defined.

FIG. 9 illustrates an example in which the frequency resource of the CORESET configuration associated with the SS configuration is not included in a plurality of MLs. FIG. 9(a) illustrates an example in which Example-1 for an offset unit and Example-2-1 for an offset reference point are applied. FIG. 9(b) illustrates an example in which Example-1 for an offset unit and Example-2 for an offset reference point are applied.

Referring to FIG. 9 (a), by configuring two different offset values (e.g., offset1 = 0 / offset2 = 3N) and applying two offsets based on the starting point of the first unit of the available 6RB unit of BWP, ML1 and ML2 may be defined. Referring to FIG. 9(b), by configuring two different offset values (e.g., offset1 = N / offset2 = 3N) and applying an offset value based on the start resource of BWP, ML1 and ML2 may be defined. And, the ML1 and ML2 may be mapped to a different resource than the frequency resources of the CORESET configuration associated with the SS configuration.

In FIG. 8 and FIG. 9, even though a frequency resource of a specific CORESET (e.g., CORESET associated with a SS configuration) is expressed as one box, the box may be a continuous frequency resource. In addition, the frequency resource of a specific CORESET (e.g., CORESET associated with a SS configuration) may be defined based on the start frequency resource and the last frequency resource of the CORESET configuration.

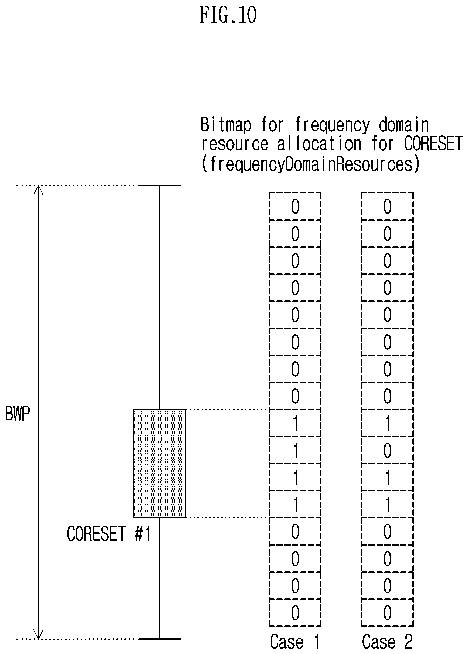

FIG. 10 illustrates a frequency resource of the CORESET configuration according to an embodiment of the present disclosure.

Referring to FIG. 10, Case 1 illustrates a case in which the frequency resource of CORESET, which determines the size of the frequency resource of each ML, is defined in a continuous form, and Case 2 illustrates a case in which the size of the frequency resource of the ML is determined based on the first RB and the last RB indicated by a bitmap when the frequency resource of CORESET is not defined in a continuous form.

The example of FIG. 10 may be equally applied to other examples (method #1 and method #3 and the following proposed methods) for defining a plurality of MLs proposed in the present disclosure.

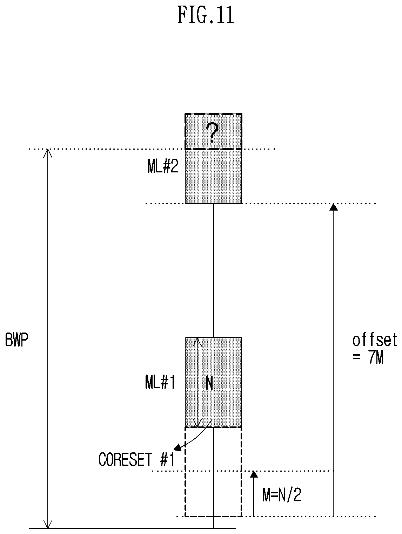

FIG. 11 illustrates a method of defining multiple monitoring locations (MLs) according to an embodiment of the present disclosure.

In FIG. 11, when a specific offset value for defining the ML is indicated, the case where the ML indicated by the specific offset value is out of the BWP region is exemplified. Referring to FIG. 11, a frequency resource of a CORESET configuration associated with a SS configuration (specific CORESET) may be defined as ML1. And, by configuring an offset value based on one of the aforementioned reference points (e.g., a multiple of half of the specific CORESET configuration frequency resource size (e.g., 7M, M is half of the specific CORESET configuration frequency resource size (N), M = N/2)), ML2 may be defined.

In order to solve the above problems, the following method may be applied.

Example-1. When a specific ML is out of the BWP region, the remaining resources from a specific position for the ML crossing the BWP region may be re-defined to have the same size from a specific position within the BWP. The 'remaining resources from a specific location for ML crossing the BWP region' may mean the remaining resources from the first RB after the last 6RB that may correspond to the bitmap (i.e., frequencyDomainResources) defined for frequency resource allocation in the CORESET configuration, and/or may mean the remaining resources from the first RB not included in the BWP region. And/or, the 'specific location in the BWP' may mean the first RB among the first 6RBs corresponding to the first bit among the bitmaps (i.e., frequencyDomainResources) defined for frequency resource allocation in the CORESET configuration, and/or may mean the starting RB of BWP.

As above, when the resource of a specific ML is redefined, the CCE may be defined based on the lowest RB in the redefined ML resource. And/or, CCE may be defined based on the lowest RB in the ML resource before being redefined.

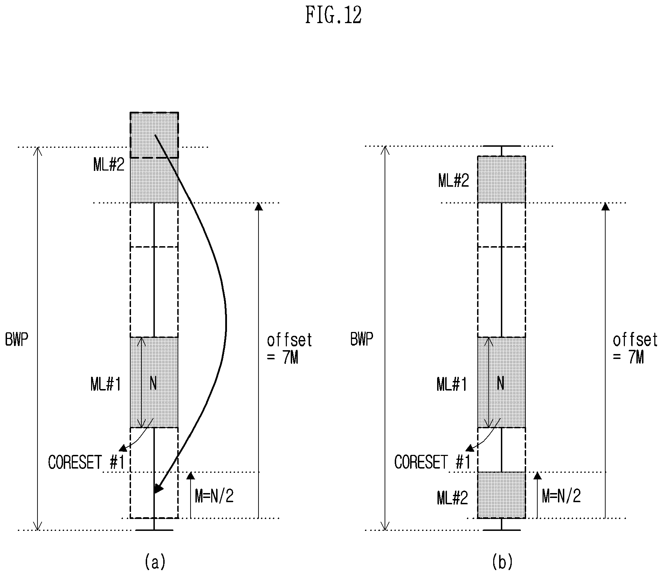

FIG. 12 illustrates a method of redefining some resources of a specific monitoring location (ML) according to an embodiment of the present disclosure.

FIG. 12(a) illustrates a case in which a specific ML is out of the BWP region, and FIG. 12(b) illustrates an example of redefining some resources of a specific ML.

FIG. 12(b) illustrates an example that the remaining resources (arrow area in FIG. 12(a)) from the first RB after the last 6RB that may correspond to the bitmap (i.e., frequencyDomainResources) defined for frequency resource allocation in the CORESET configuration is redefined as the same size from the first RB among the first 6RBs corresponding to the first bit in the bitmap.

Proposal #2: BWP is divided into a plurality of areas, and a specific area(s) among a plurality of areas is configured/indicated/defined, so that ML(s) in which repetition/fraction transmission will be made may be configured/indicated/defined.

In this proposal, a plurality of areas in the BWP for defining a plurality of MLs are referred to as monitoring location candidate (MLC).

The size/number/location of each MLC is configured/indicated/defined based on the total number of MLCs defined in the BWP and/or the size of the BWP and/or the number of specific REs/REGs/RBs and/or the reference location defining the MLC.

As an example of the 'the number of specific REs/REGs/RBs', the example of the method for the unit of the offset value of the proposal #1 may be equally applied.

Example-1: Example 1 defining the size/number/location of MLC

The total number of MLCs defined in the BWP may be configured/indicated/defined to the terminal, and the size of the MLC per BWP may be determined according to the size of the BWP. As a reference point for defining the location of each MLC, the example of a method of defining a reference point for applying the offset of Proposal #1 may be equally applied. This is equally applicable to other examples of defining the size/number/location of MLCs, which will be described later.

For example, when the size of the BWP is 40 physical resource blocks (PRB) and the number of MLCs is configured to 4, each MLC in the corresponding BWP may be configured with 10 PRBs. If the size of the BWP is not divisible by the number of MLCs (i.e., the size of each MLC is not determined equally), the size of a specific MLC (e.g., the first and/or the last) may be determined based on ceil operation/floor operation/round operation/modular operation, and the like.

Example-2: Example 2 defining the size/number/location of MLC

A specific number of REs/REGs/RBs may be configured/indicated/defined to the UE, and the specific number of REs/REGs/RBs may correspond to the size of the MLC. For example, the number of REs/REGs/RBs of CORESET (associated with SS) may be used as the number of specific REs/REGs/RBs. Alternatively, a size for one MLC (e.g., the number of REs/REGs/RBs) may be indicated/configured. Here, the number of MLCs per BWP may be determined according to the size of the BWP.

For example, when the size of the BWP is 60 PRB and the size of the CORESET (associated with SS) is 12 PRB, each MLC may consist of 12 PRBs. In this case, a total of 5 MLCs in the corresponding BWP may be defined. If not divisible, the size of a particular MLC (e.g., first and/or last) may be determined based on ceil operation/floor operation/round operation/modular operation, and the like.

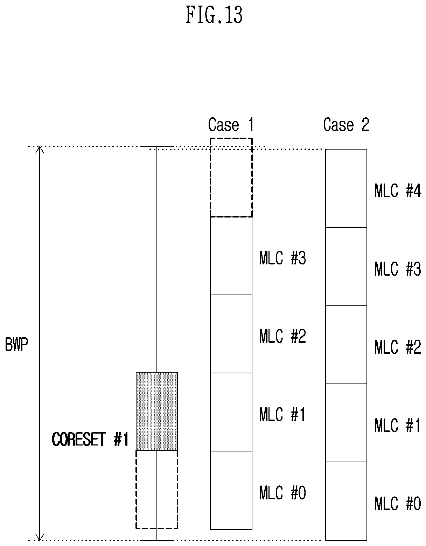

FIG. 13 illustrates an example of defining the size/number/location of monitoring location candidates (MLCs) according to an embodiment of the present disclosure.

Referring to FIG. 13, FIG. 13 illustrates a case that the size of the MLC corresponds to the size of the CORESET based on Example-2 defining the size/number/location of MLCs described above and the total number of MLCs is determined according to the size of the BWP. In FIG. 13, case 1 illustrates a case that the location of the MLC is defined based on the start RB of the bit corresponding to the lowest 6RB among the bitmaps defined for configuring the frequency resource location of a specific CORESET (e.g., CORESET associated with SS). In FIG. 13, case 2 illustrates a case that the location of the MLC is defined based on the location (and/or RB) of the BWP start resource. As described above, the total number of MLCs may be determined differently according to a reference location defining the MLC.

When the size/number/location of MLCs is determined based on the proposed method, the base station may configure/indicate/define specific MLs among the MLCs to the UE. And, repetition/fraction transmission may be performed through MLs configured/indicated/defined to the terminal. For example, the base station may configure/indicate/define the size/number/location of MLCs to the UE based on the proposal through SS configuration, and may select/configure specific ML(s) from among a plurality of MLCs to the UE. For this, for example, a bitmap scheme in which a specific bit may correspond to a specific MLC may be applied.

Meanwhile, any one specific method (based on a fixed rule and/or L1/L2 signaling) among the proposed methods of Proposal #1 and Proposal #2 may be applied. And/or, the two proposed methods of proposal #1 and proposal #2 may be considered together and applied (hybrid method). For example, based on proposal #2, the base station may configure/indicate specific MLC(s) to the terminal, and for the actual location of the ML, an additional offset (e.g., an RB level offset) value(s) for the specific MLC(s) may be configured/indicated based on Proposal #1. In this case, compared to the case where only the method of Proposal #2 is applied, flexibility for a plurality of ML configurations may be increased, and compared to the case where only the method of Proposal #1 is applied, signaling overhead may be reduced.

Method #2: A method of defining a plurality of monitoring locations (MLs) in a frequency domain, in a manner that divides a frequency domain of a single CORESET configuration

Method 2 proposes a method in which a plurality of MLs are defined/configured/allocated to the same time resource in a time domain and defined/configured/allocated to different frequency resources in a frequency domain.

Proposal #1: In the frequency resource of CORESET configuration and/or in the BWP, a frequency resource is divided in a specific unit, and ML(s) in which repetition/fraction transmission is to be performed may be configured/indicated/defined.

The following may be applied as an example of a specific unit of the present proposal.

Example-1: Resources may be divided in units of RE (set)/ RB (set)/ REG (set)/ REG bundle (set)/ CCE (set) within the BWP. In addition, resources corresponding to an even/odd and/or lower half/higher half of the divided resources may correspond to different MLs. As an example of the 'RE (set)/RB (set)/REG (set) ', the example of the unit of the offset value of the proposal #1 of the method #1 may be equally applied. As the reference point when classifying resources, an example of a method of defining a reference point to which the offset of the proposal #1 of the method #1 is applied may be equally applied. This may be equally applied to Example-2/3 below.

Example-2: Resources may be divided in units of RE (set) / RB (set) / REG (set) / REG bundle (set) / CCE (set) within a frequency resource configured in a specific CORESET (e.g., CORESET associated with SS). In addition, resources corresponding to an even/odd and/or lower half/higher half of the divided resources may correspond to different MLs.

Example-3: According to the parameter (i.e., higher layer parameter precoderGranularity) for the precoder granularity configured in a specific CORESET (e.g., CORESET associated with SS), a method of mapping a resource divided based on the above-described Example-1 or Example-2 to ML may be applied differently.

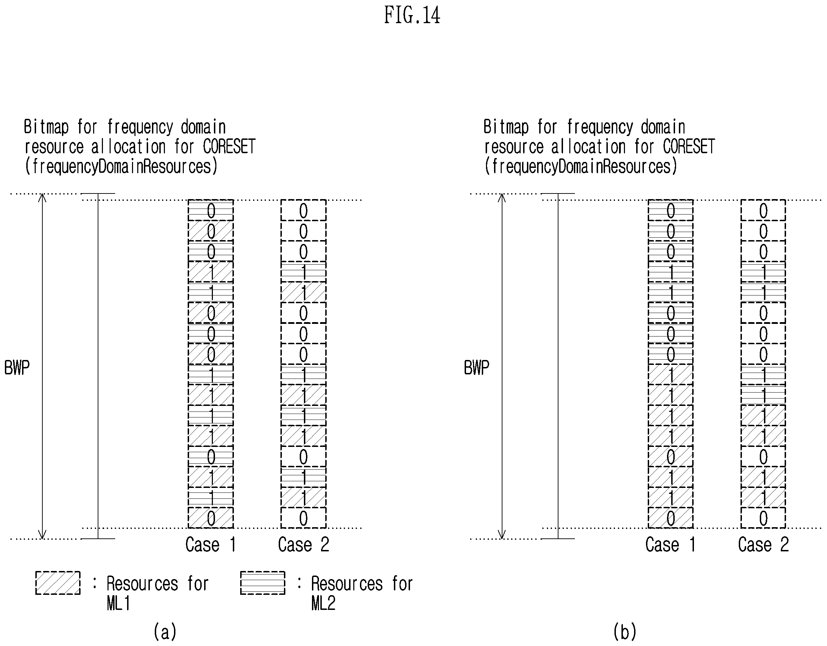

FIG. 14 illustrates a method of defining multiple monitoring locations (MLs) according to an embodiment of the present disclosure.

In FIG. 14, frequency resources are divided based on a resource unit corresponding to each bit of the CORESET configuration frequency resource bitmap, and different frequency resources correspond to different MLs. FIG. 14(a) illustrates a case that frequency resources of even/odd specific units correspond to different MLs, respectively, and FIG. 14(b) illustrates a case that the frequency resources of the lower/higher half correspond to different MLs, respectively.

Case 1 of FIGS. 14 (a) and 14 (b) illustrates a case that resources in the BWP are divided into regions corresponding to different MLs and the actual frequency of each ML is defined based on the actual frequency resource of the CORESET configuration. Case 2 of FIGS. 14(a) and 14(b) shows an example of defining the resource of each ML based on the actual frequency resource of the CORESET configuration (i.e., case 2 illustrates an example in which ML corresponds to a resource corresponding to bit value = 1 of a bitmap for the frequency resource allocation of the CORESET configuration. Frequency resources of an even/odd specific unit are counted within a frequency resource in which CORESET is configured, and frequency resources of the lower half/upper half are determined.). It can be seen that the actual resource corresponding to each ML may vary according to Case 1/2.

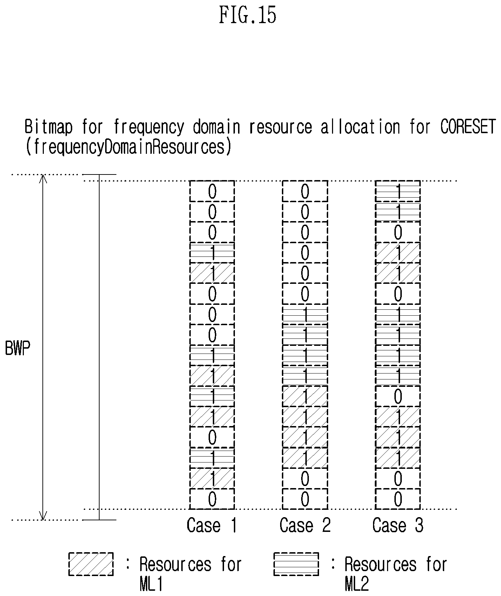

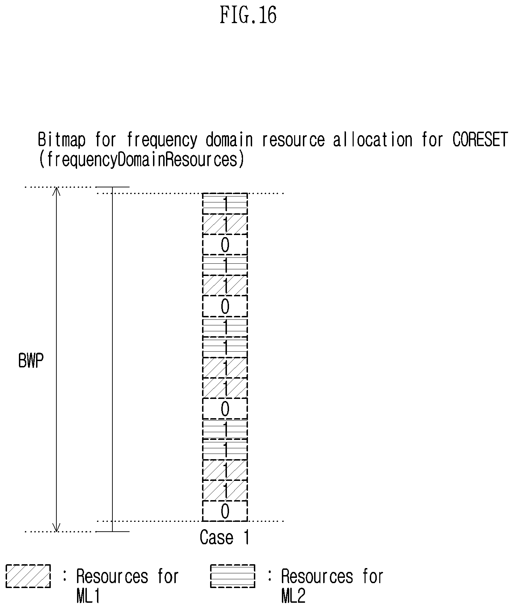

FIG. 15 and FIG. 16 illustrate a method of defining multiple monitoring locations (MLs) according to an embodiment of the present disclosure.

FIG. 15 and FIG. 16 exemplify a case in which frequency resources are divided based on a resource unit corresponding to each bit of the CORESET configuration frequency resource bitmap, and different frequency resources correspond to different MLs.

Case 1 of FIG. 15 illustrates a case that, when the precoder granularity (i.e., higher layer parameter precoderGranularity) is configured to be the same as the REG bundle (i.e., higher layer parameter sameAsREG-bundle), frequency resources of an even/odd specific unit correspond to different MLs. Case 2 of FIG. 15 illustrates a case that, when the precoder granularity (i.e., higher layer parameter precoderGranularity) is configured to consecutive RBs (ie, higher layer parameter allContiguousRBs), the lower half / upper half frequency resources correspond to different MLs. As described above, when a different scheme is applied according to the precoder granularity (i.e., higher layer parameter precoderGranularity), the advantage of improving the channel estimation performance of the UE may be obtained. Here, frequency resources using the same DMRS precoder in the frequency domain may be configured by the precoder granularity.

Case 3 of FIG. 15 illustrates an example of corresponding to different MLs in units of consecutively allocated frequency resources when precoder granularity is configured to allContiguousRBs. A plurality of groups/sets of consecutively allocated frequency resource(s) exist, and different MLs may correspond to each group/set unit. In other words, different MLs may be corresponded to each other in units of groups/sets alternately or cyclically. In this case, it may have the advantage of maximally improving the channel estimation performance with respect to the continuously allocated frequency resources.

FIG. 16 illustrates a case in which, when the precoder granularity is configured to allContiguousRBs, the frequency resources of the lower/higher half within consecutively allocated frequency resources correspond to different MLs, respectively. A plurality of groups/sets of consecutively allocated frequency resource(s) exist, and frequency resources of lower/higher half within each group/set unit correspond to different MLs. That is, each group/set unit may be divided into lower/higher half frequency resources, and frequency resources in the lower/higher half correspond to differnet MLs.

FIG. 16 illustrates an example in which the lower half/higher half correspond to different MLs in consecutively allocated frequency resources. In this case, it is possible to improve the channel estimation performance as much as possible within the continuously allocated frequency resources. In addition, the frequency multiplexing gain may be improved by allowing the resources included in each ML to be spread over the entire band.

Meanwhile, in the above proposals (e.g., the proposals of method #1 and method #2), methods for defining different MLs have been proposed, and different QCL RS(s) (and/or TCI state(s)) is corresponded to ML defined according to the above proposals, and the same hash function may be applied to different MLs. In this case, the definition of a PDCCH candidate according to the CORESET configuration and the SS configuration may follow the same rules as before, but different QCL RS(s) (and/or TCI state(s)) may correspond to different regions. In this case, performance improvement may be expected through multi-TRP transmission.

Method #3: A method of defining multiple MLs in the time domain, based on a single CORESET configuration and an SS configuration

Method 3 proposes a method in which a plurality of MLs are defined/configured/allocated to the same frequency resource in the frequency domain and defined/set/allocated to different time resources in the time domain.

Assuming that UEs equipped with a single panel in FR2 or higher, when the UE needs to receive PDCCHs in different beam directions, transmission resources of different PDCCHs need to be separated from each other in the time domain. Therefore, it may be considered that a plurality of MLs for which repetition/fraction transmission is to be performed are divided into time domains.

When the proposed operation to be described below is applied, according to the CORESET configuration and the SS configuration, (multiple) ML(s) for a monitoring occasion (MO) may be defined based on the resource area included in the MO(s) based on the existing definition within the slot where the MO is defined. In a proposed operation to be described below, a specific MO may be defined as a plurality of ML(s) which are difined (newly) based on a resource of the MO and/or a resource of an existing MO that may correspond to a specific ML. In the above, it can be assumed that each MO may transmit independent/different DCIs, and it is assumed that DCI based on repetition/fraction transmission may be transmitted for multiple MLs in the same MO.

Proposal #1: A plurality of MLs for repetition/fraction transmission may be defined based on MO(s) and specific offset value(s) configured/indicated through CORESET configuration and SS configuration.

Whether to apply the proposed method may be configured/indicated by the base station to the terminal based on L1/L2 signaling.

The specific offset value may be defined as a fixed value between the base station and the terminal, and/or may be configured/indicated by the base station to the terminal based on L1/L2 signaling.

As for the offset value, single and/or multiple values may be configured/indicated/defined.

Example-1: ML(s) in which repetition/fraction transmission is to be performed may be defined based on a resource region (e.g., start/last symbol of each MO) defined through CORESET configuration and SS configuration.

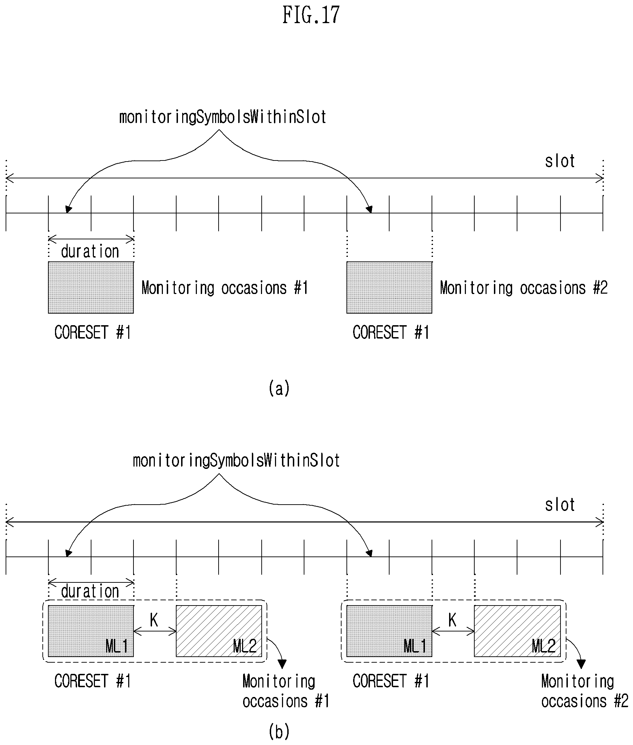

FIG. 17 illustrates a method of defining multiple monitoring locations (MLs) in a time domain according to an embodiment of the present disclosure.

FIG. 17 shows an example in which a plurality of MLs are defined for a specific MO when the above embodiment is applied. Here, the specific MO may mean a resource unit for performing blind decoding (BD) on the PDCCH. In addition, independent and/or different DCI may be transmitted through a plurality of MOs. In FIG. 17, it can be assumed that independent/different DCI may be transmitted in different MOs, and it can be assumed that repetition/fraction transmission may be performed through a plurality of MLs corresponding to the same MO.

FIG. 17(a) shows an example of an existing operation, and FIG. 17(b) shows an example of an operation to which the proposed method is applied. In FIG. 17(b), within the slot where the MO is defined according to the CORESET configuration and the SS configuration, ML(s) for the MO may be defined at a time point when an offset by K is applied from the resource region (e.g., the first/last OFDM symbol) included in the MO(s) based on the existing definition. In other words, MO based on the existing definition may correspond to ML1 (i.e., MO1 in FIG. 17(a) corresponds to ML1 in MO1 in FIG. 17 (b), MO2 in FIG. 17(a) corresponds to ML1 in MO2 of FIG. 17(b)), ML(ML2) (i.e., ML2 in MO1 of FIG. 17(b), ML2 in MO2) may be additionally difined in the resource region to which an offset (K in FIG. 17 (b)) is applied based on the MO.

In the example of FIG. 17(b), a single offset value of K was assumed, but ML(s) for each MO may be defined based on a number of offset values such as K1/K2/.... Also, for example, a plurality of MLs (e.g., more than two MLs) may be defined in one MO, and offsets between MLs in the same MO may be the same. For example, ML1, ML2, and ML3 may be defined in one MO, and the offset between ML1 and ML2 and the offset between ML2 and ML3 may be the same.

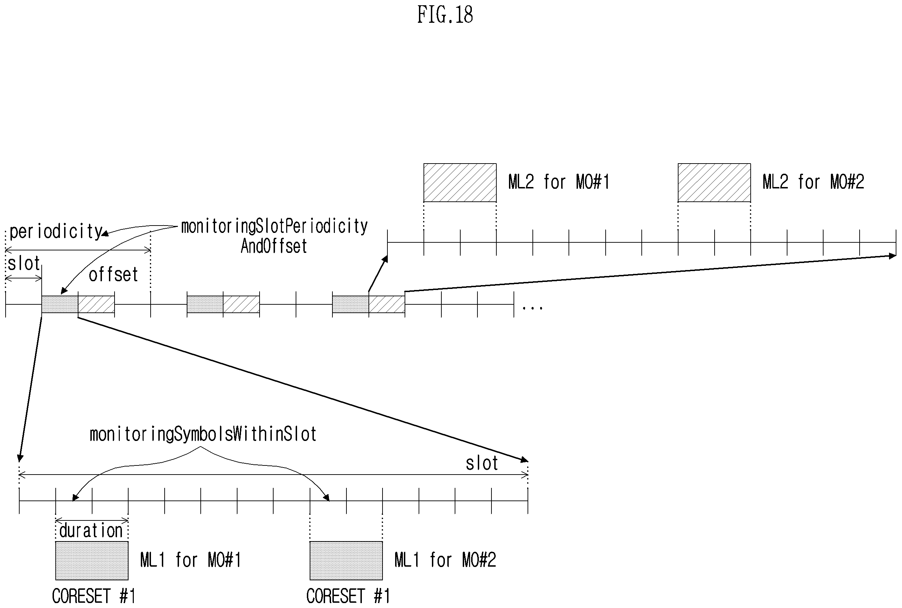

FIG. 18 illustrates a method of defining multiple monitoring locations (MLs) in a time domain according to an embodiment of the present disclosure.

FIG. 18 shows an example in which a plurality of MLs are defined in different slots.

Referring to FIG. 18, the K value may be defined as a specific value in units of slots. In FIG. 18, it is assumed that the value of K is 0 slot. As shown in FIG. 18, a plurality of MOs may exist in a specific slot according to the CORESET configuration and the SS configuration. And, based on the offset of the proposed method, a plurality of ML(s) corresponding to the plurality of MOs may be defined in a slot separated by an offset from the specific slot. The ML according to the proposed method may be defined with the same symbol location and duration as the existing MO in a slot spaced apart by an offset.

Meanwhile, even when a specific offset value is not explicitly configured/indicated, the above-mentioned proposed operation may be applied, and in this case, an applied default offset value may be separately defined. For example, repetition/fraction transmission may be explicitly/implicitly configured/indicated to the terminal. In this case, when a specific offset value is explicitly configured/indicated, an operation may be performed based on the specific offset value. Also, when the explicit offset value is not configured/indicated, an operation may be performed based on a separately defined default offset value.

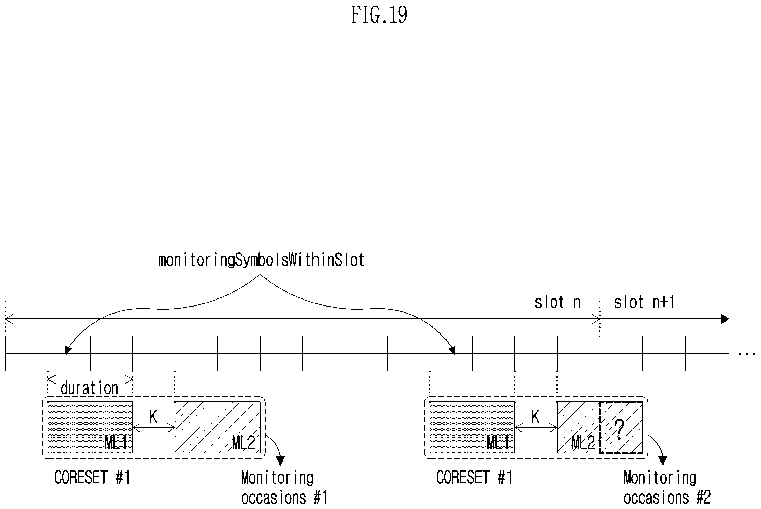

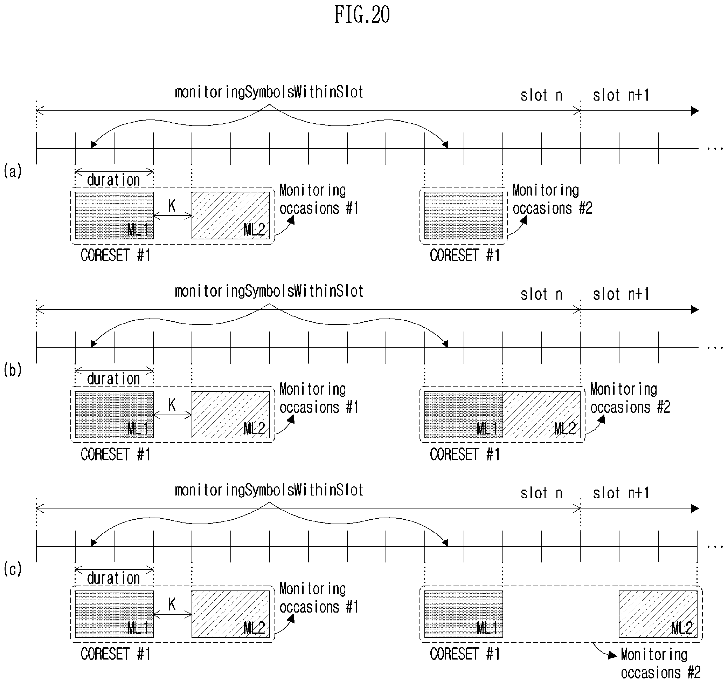

FIG. 19 and FIG. 20 show an example in which a plurality of MLs are defined in the time domain according to an embodiment of the present disclosure.

In FIG. 19, when a specific offset value is indicated, an ML indicated by a specific offset value is out of a slot boundary. For the above situatison, the following method may be applied.

When the ML(s) of a specific MO is out of the slot boundary,

Example-1: As shown in Figure 20 (a), repetition / fraction may not be performed for the MO; and/or

Example-2: As shown in FIG. 20(b), an offset value in the MO may be adjusted so that the ML of the MO does not cross a slot boundary. For example, the adjustment of the offset value may be performed only in a specific MO crossing a slot boundary, or may be performed equally in a plurality of MOs; and/or

Example-3: As shown in FIG. 20(c), ML(s) crossing a slot boundary in the MO may be defined as a specific position (or from a specific position) of the next slot. Here, the 'specific location' may be fixedly defined or configured in the terminal by the base station based on L1/L2 signaling.

A specific method among the above-described example-1, example-2, and example-3 may be fixedly defined and applied, and may also be configured to the terminal by the base station based on L1/L2 signaling. And/or, the above methods may be applied in a mixed form.

In FIG. 20(a), since ML2 of the second MO crosses the slot boundary, in the second MO, a case in which repetition/fraction transmission is not performed is exemplified. In this case, the standard and terminal implementation may be simply defined. In addition, since the terminal may not wait for ML2, DCI decoding time may be reduced. However, since repetition/fraction transmission may not be performed in a specific MO, it may have a disadvantage that the reliability of the PDCCH may be lowered by that much.

In FIG. 20(b), since ML2 of the second MO crosses the slot boundary, a case in which the offset value in the second MO is adjusted so that ML2 of the second MO does not cross the slot boundary is exemplified. FIG. 20(b) illustrates a case in which ML1 and ML2 are defined in a single slot by adjusting the offset K value, which was previously defined as 1 symbol, to 0 symbol. The offset K value adjusted in this way may be defined as the maximum number of symbols (smaller than the original offset K value) that allows a plurality of MLs to be located in the same slot. In this case, since the terminal may not wait for ML2 until the next slot, DCI decoding time may be reduced. However, even if the offset K value is adjusted, there may be cases where different MLs may not be defined in the same slot. In this case, the method of FIG. 20(a) or FIG. 20(c) may be applied. That is, the methods of FIGS. 20(a), 20(b), and 20(c) may be applied in a mixed form.

FIG. 20(c) shows an example in which ML2 crossing the slot boundary is defined from a specific position of the next slot when ML2 of the second MO crosses the slot boundary. It is assumed that the specific location is the same as the location of ML1 of the first MO in slot n. As another example of the specific location, it may correspond to a location of ML #y of MO #x (eg, ML2 of MO1) in slot n.

Proposal #2: One or more MOs existing in a specific symbol/slot time period (duration) in the resource region defined through CORESET configuration and SS configuration (a window having a specific size) may be defined as a number of MLs to which repetition/fraction transmission will be performed.

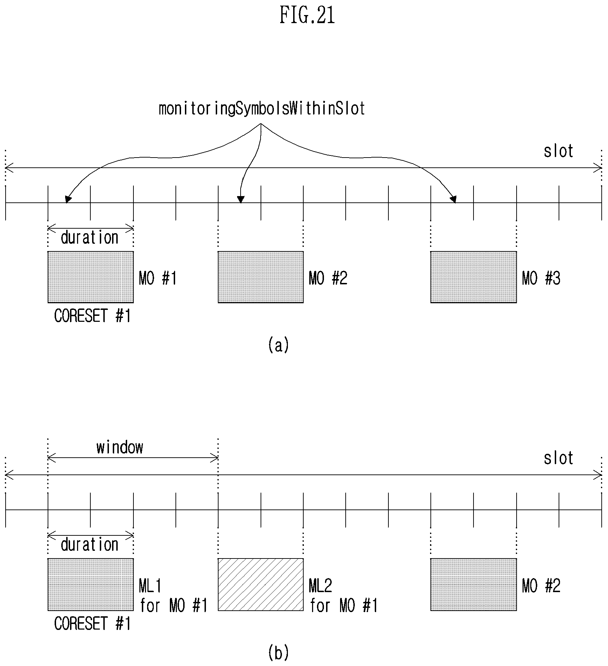

FIG. 21 illustrates a method of defining a plurality of monitoring locations (MLs) in a time domain based on a window having a specific size according to an embodiment of the present disclosure.

FIG. 21(a) illustrates an existing operation, and FIG. 21(b) illustrates a proposed operation.

In FIG. 21 (a), in the SS configuration, a case in which three MOs are configured through a parameter for a monitoring symbol within a slot (i.e., a higher layer parameter monitoringSymbolsWithinSlot) is exemplified.

Here, in the SS configuration, a window value corresponding to a specific symbol/slot duration may be configured. According to this proposal, different MOs defined within the window value may be defined as a plurality of MLs for a single MO.

FIG. 21(b) shows an example in which a window is defined as 4 symbols. Here, since the existing MO#1 and MO#2 (i.e., MO#1, MO#2 in FIG. 21(a)) may be defined within 4 symbols, MO#1 and MO#2 may be defined as ML1, ML2 for #1 (or MO #2) according to the above proposal.

In the above example, it is assumed that the first OFDM symbol of different MOs is equal to or less than the number of window symbols as a criterion for including MOs in a window. That is, the interval from the first symbol of MO#1 of FIG. 20(a) to the first symbol of MO#2 of FIG. 20(b) is included in the number of window symbols.

However, the above assumption may be an example, and the operation is not limited as a sole method to apply. For example, it may be determined whether MOs are included in the window based on the last OFDM symbol of different MOs, or whether MOs are included within the window based on the interval between the last symbol of the i-th MO and the first OFDM symbol of the i+1-th MO.

Proposal #3: A plurality of MLs in which repetition/fraction transmission will be performed may be defined based on the location value of the ML(s) corresponding to each MO and the MO(s) configured/indicated through the CORESET configuration and the SS configuration.

Example-1: ML corresponding to a specific MO may be independently configured/indicated through a separate parameter (within SS configuration).

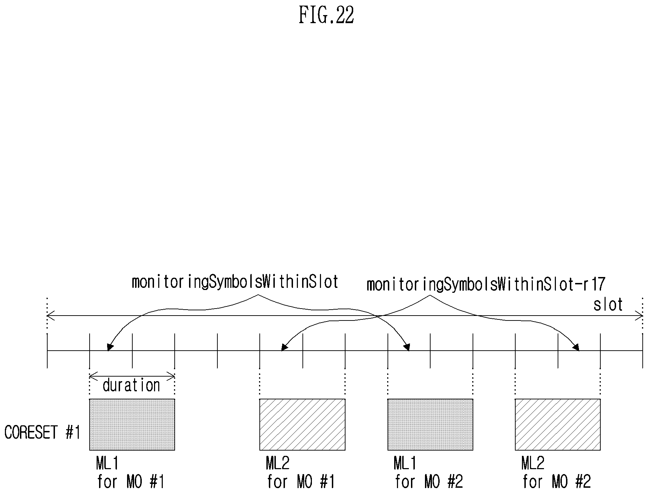

FIG. 22 illustrates a method of defining multiple monitoring locations (MLs) in the time domain according to an embodiment of the present disclosure.

FIG. 22 illustrates a method of defining a plurality of MLs for a specific MO based on a separately indicated ML location.

Referring to FIG. 22, a parameter for a monitoring symbol within a slot (i.e., a higher layer parameter monitoringSymbolsWithinSlot) is a parameter defined in Rel-15, and a plurality of MOs (i.e., MO1, MO2 in FIG. 22) may be defined in one slot according to the parameter. Meanwhile, according to the proposed method, a new parameter for a monitoring symbol within a slot (i.e., higher layer parameter monitoringSymbolsWithinSlot-r17) may be defined. Another ML (i.e., ML2 in MO1 and ML2 in MO2 in FIG. 22) for the MO defined based on monitoringSymbolsWithinSlot may be defined through the monitoringSymbolsWithinSlot-r17 parameter. As an example of another parameter to which the above method may be applied, a parameter for monitoring slot period and offset in SS settings (i.e., higher layer parameter monitoringSlotPeriodicityAndOffset), a new parameter for the monitoring slot period and offset based on the parameter for the time interval (i.e., the upper layer parameter duration), etc. (i.e., the upper layer parameter monitoringSlotPeriodicityAndOffset-r17), and a new parameter for the time interval (ie, higher layer parameter duration-r17) may be defined.

Example-2: It was possible to configure a plurality of MOs within one slot through a specific parameter (i.e., upper layer parameter monitoringSymbolsWithinSlot) in the existing SS configuration. Here, by different interpretation of the parameter, multiple MLs for a single MO may be configured through the parameter.

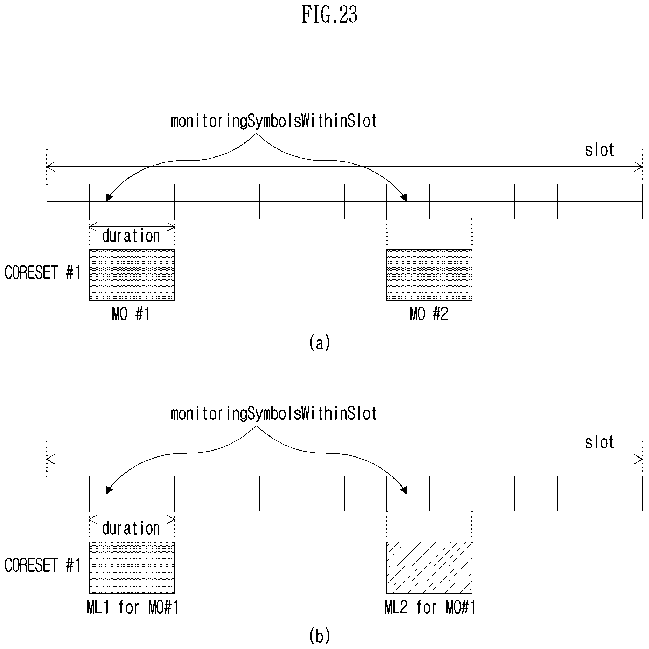

FIG. 23 illustrates a method of defining multiple monitoring locations (MLs) in the time domain according to an embodiment of the present disclosure.

FIG. 23 illustrates a method of defining a plurality of MLs for a specific MO based on a separately indicated ML location.

FIG. 23(a) illustrates an existing method, and FIG. 23(b) shows an example of a proposed method.

FIG. 23 (a) shows an example in which two MOs are configured through a parameter for a monitoring symbol within a slot (i.e., a higher layer parameter monitoringSymbolsWithinSlot). In Fig. 23(b), according to the proposed method, it is assumed(interpreted) that a plurality of resource regions indicated through a parameter for monitoring symbols within a slot (i.e., a higher layer parameter monitoringSymbolsWithinSlot) corresponds to a plurality of MLs for a single MO. Repetition/fraction transmission for the same DCI may be performed through the plurality of MLs.

Here, a plurality of MLs within the same MO may assume that DCI based on repetition/fraction transmission may be transmitted.

On the other hand, in the above-mentioned proposed methods (eg, proposal #1/#2/#3, etc.), when multiple CORESET configurations are associated with one SS configuration (to configure multiple MLs), and/or when multiple TCI states (and/or QCL RS(s)) are configured in a single CORESET configuration and associated with one SS configuration, it may be applied to all. For example, even when a plurality of CORESET configurations are associated with one SS configuration in Example-1 (see FIG. 22), each CORESET may be mapped to a parameter for a monitoring symbol in a different slot (i.e., a higher layer parameter monitoringSymbolsWithinSlot). In addition, even when multiple TCI states (and/or QCL RS(s)) are configured in a single CORESET configured and associated with one SS configuration, each TCI state (and/or each ML corresponding to a different TCI state) may be mapped to parameters for monitoring symbols in different slots (i.e., higher layer parameter monitoringSymbolsWithinSlot).

In the above-described proposed methods (eg, proposal #1/#2/#3, etc.), in a plurality of MLs within the same MO for repetition/fraction transmission, it may be restricted that a specific DCI among DCI formats configured by the SS configuration may be only transmitted. That is, repetition/fraction transmission may be possible only using some DCI formats among DCI formats.

Meanwhile, a specific method (based on a fixed rule and/or L1/L2 signaling) may be applied to the above-described proposed methods (e.g., proposal #1/#2/#3, etc.). And/or, one or more different proposed methods may be considered together and applied (hybrid method).

Method #4: Operation Method of the terminal when a collision (and/or overlap) occurs between a specific ML(s) and a specific DL/UL channel/signal/resource

When a plurality of MLs to perform repetition/fraction transmission are defined according to proposed methods in the above-described method #1/#2/#3 (e.g., method #1 (proposal #1/proposal #2)/method #2 (proposal #1)/method #3 (proposal #1/ proposal #2/ proposal #3), etc.), a specific ML among MLs (corresponding to the same DCI) may collide/overlap with different DL/UL channel/signal. For example, the DL/UL channel/signal may include (LTE) CRS/ synchronization signal block (SSB)/ specific CSI-RS (e.g., TRS, etc.)/ (connected to specific SS configuration) specific CORESET (e.g., CORESET connected to the SS configuration of the lowest index/ CORESET associated with the SS configuration of a specific DCI format/ CORESET 0, etc.)/ DL/UL data/control channel for a specific usage (e.g., PDSCH for URLLC, URLLC PUSCH for ACK/NACK feedback, etc.)/ symbol region configured as UL resource/ specific SRS, etc. The proposed method is not limited to the above exemplified DL/UL channel/signal, but is an example to which the proposed method may be applied. Accordingly, the proposed method may be applied to a predetermined DL/UL channel/signal not included in the above example.

When a specific ML among MLs (corresponding to the same DCI) collides with the DL/UL channel/signal as described above, in order to perform blind decoding (BD) on the reception of the DL/UL channel/signal and/or DCI (/PDCCH(s)) transmitted through multiple MLs, a terminal operation needs to be defined, and the terminal operation is proposed below.

Proposal #1: For ML(s) that collides with another DL/UL channel/signal (some and/or the entire area), the location of the resource may be shifted/changed based on a specific rule (so that no collision occurs). The movement may be performed in the frequency domain and/or the time domain.

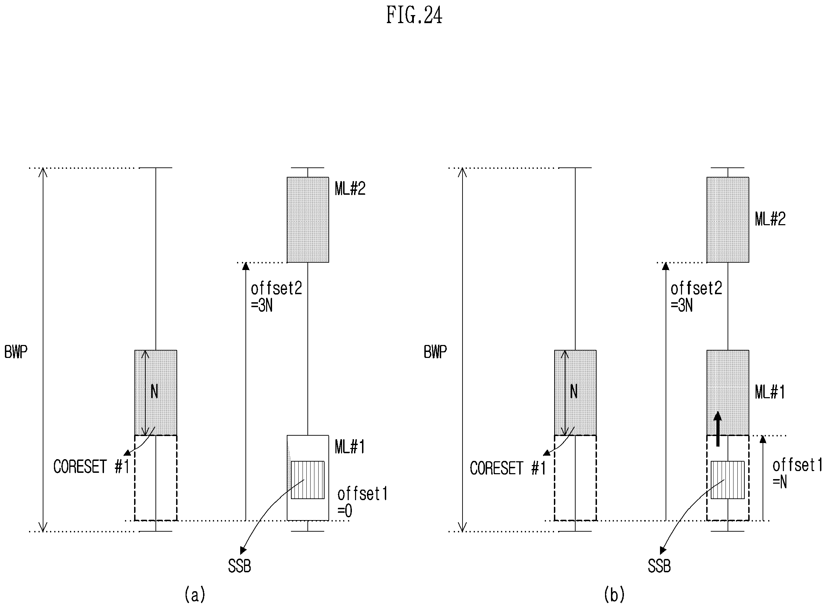

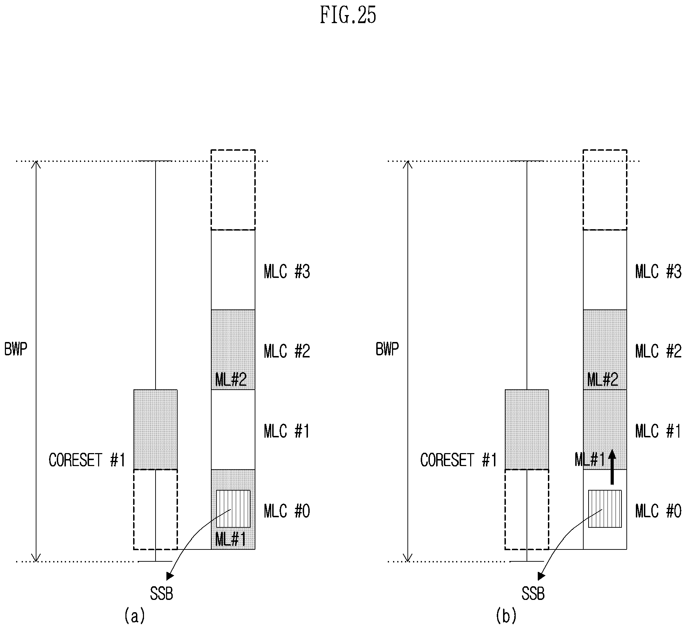

FIG. 24 and FIG. 25 illustrate a method for resolving collisions between a plurality of MLs defined in the frequency domain and other channels/signals according to an embodiment of the present disclosure.

FIG. 24 and FIG. 25 show examples when a specific ML collides with an SSB and moves when a plurality of MLs are defined in the frequency domain.

FIG. 24(a) illustrates a case where ML#1 collides with SSB in an offset-based ML definition method. FIG. 24( b ) illustrates a case in which the location of ML#1 is shifted to avoid collision. Referring to FIG. 24B , the terminal may assume that the location of the specific ML is shifted in units of offset to avoid collision between the specific ML and the SSB (or other DL/UL channel/signal). Here, the terminal may assume that a specific ML is shifted to the nearest location (a location with the smallest offset) where collision with the SSB (or other DL/UL channel/signal) does not occur.

FIG. 25(a) illustrates a case in which ML#1 collides with an SSB in an MLC-based ML definition method. FIG. 25(b) illustrates a case in which the location of ML#1 is shifted to avoid collision. Referring to FIG. 25(b), the terminal may assume that the location of the specific ML is shifted in units of MLC to avoid collision between the specific ML and the SSB (or other DL/UL channel/signal). Here, the terminal may assume that a specific ML shifts to the nearest MLC in which collision with the SSB (or other DL/UL channel/signal) does not occur.

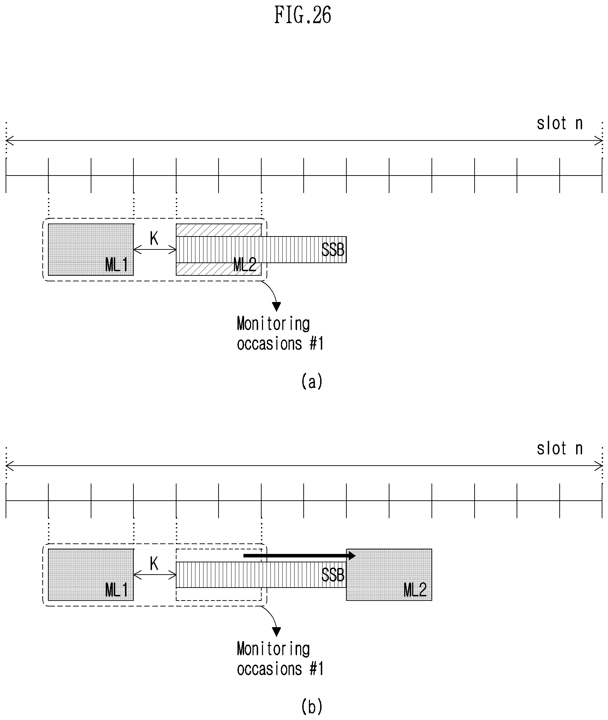

FIG. 26 illustrates a method for resolving collisions between multiple MLs defined in the time domain and other channels/signals according to an embodiment of the present disclosure.

FIG. 26(a) illustrates a case where ML#2 collides with an SSB when multiple MLs in the time domain are defined. FIG. 26(b) illustrates a case in which the location of ML#2 is shifted to avoid collision. The terminal may assume that the location of the specific ML is shifted to avoid collision between the specific ML and the SSB (or other DL/UL channel/signal). For example, it may be assumed that the location of a specific ML is shifted in units of symbols. Here, the terminal may assume that the location of the specific ML is shifted to the nearest location (the location with the smallest number of moving symbols) where collision with the SSB (or other DL/UL channel/signal) does not occur.

Proposal #2: When ML(s) that collides with another DL/UL channel/signal (some and/or the entire region) occurs, to perform blind decoding (BD) of DCI (/PDCCH(s)) In this case, the terminal may assume that PDCCH(s) are not transmitted for the ML(s) in which the collision occurs.

In case of applying the above method, if a specific ML collides with another DL/UL channel/signal, the terminal may perform DCI (/PDCCH(s)) BD only for MLs except for the collided ML. For example, referring to FIG. 24 and FIG. 25, the terminal may assume that the PDCCH is not transmitted for ML#1 in which a collision occurs in FIG. 24(a)/FIG. 25(a). Referring to FIG. 26, for ML#2 in which collision occurs in FIG. 26(a), the terminal may assume that the PDCCH is not transmitted.

In the above-described proposed methods, for convenience of explanation, two MLs through which different PDCCH/DCI are transmitted have been mainly described, but the technical scope of the present invention is not limited, and it may also be extended and applied when two or more MLs are configured.

Method #5: A method of mapping multiple PDCCH candidates in a single CORESET configuration to different monitoring locations (ML)

According to the current standard, for the search space set s associated with CORESET p, a CCE index for PDCCH candidate $m_{s,n\_CI}$ of aggregation level (AG) L of a search space set within the slot $n_{s,f}{}^{\mu}$ for the activated DL BWP of the serving cell corresponding to the carrier indicator field $n\_CI(n_{CI})$ may be defined based on a hash function of Equation 5 below.

[Equation 5]

$$ L \cdot \left\{ \left( Y_{p,n_{s,f}^{\mu}} + \left\lfloor \frac{m_{s,n_{CI}} \cdot N_{\text{CCE},p}}{L \cdot M_{s,\max}^{(L)}} \right\rfloor + n_{CI} \right) mod \left\lfloor N_{\text{CCE},p}/L \right\rfloor \right\} + i $$

$$ - \text{CSS: } Y_{p,n_{s,f}^{\mu}} = 0; $$

$$ - \text{USS,: } Y_{p,n_{s,f}^{\mu}} = \left( A_p \cdot Y_{p,n_{s,f}^{\mu}-1} \right) mod D, \ Y_{p,-1} = n_{\text{RNTI}} \neq 0, \ A_p = 39827 \ (p \, mod \, 3 = 0), $$

$$ A_p = 39829 \ (p \, mod \, 3 = 1), \ A_p = 39839 \ (p \, mod \, 3 = 2), \ D = 65537; $$

In Equation 5, CSS refers to a common search space, and USS refers to a UE specific search space. i=0,...,L-1. $N_{\text{CCE},p}$ is the number of CCEs in CORESET p, and is numbered from 0 to $N_{\text{CCE},p}$-1.

When the PDCCH is configured as a carrier indicator field by a parameter for cross-carrier scheduling configuration (i.e., CrossCarrierSchedulingConfig) for a monitored serving cell, n_CI($n_{CI}$) is a carrier indicator field value. Otherwise, for any CSS, n_CI=0.

$m_{s,n\_CI}=0,...,M_{s,n\_CI}^{(L)}-1$. Here, $M_{s,n\_CI}^{(L)}$ is the number of PDCCH candidates configured to be monitored by the UE for the aggregation level L of the search space set s for the serving cell corresponding to n_CI ($n_{CI}$).

For any CSS, $M_{s,max}^{(L)}=M_{s,0}^{(L)}$. $M_{s,max}^{(L)}$ is the maximum value of $M_{s,n\_CI}^{(L)}$ over all set n_CI($n_{CI}$) values for the CCE aggregation level L of the search space set s.

The RNTI used for $n_{RNTI}$ is a C-RNTI.

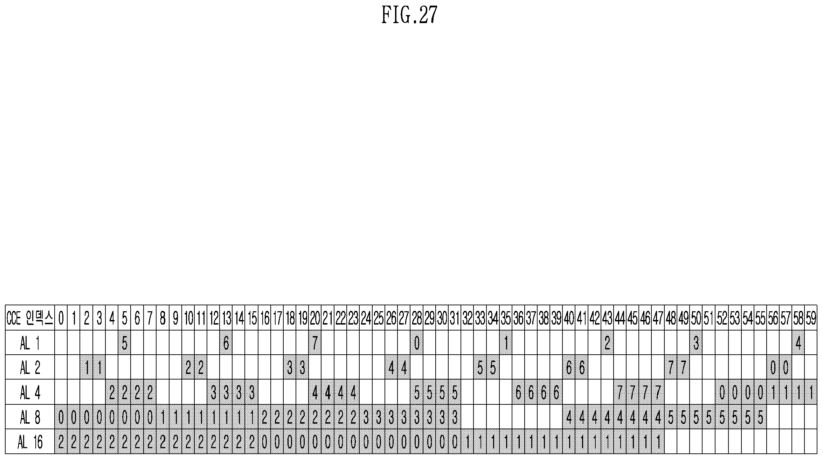

FIG. 27 illustrates a method of defining PDCCH candidates according to an embodiment of the present disclosure.

FIG. 27 illustrates CCE indexes of PDCCH candidates of each aggregation level (AL) when the following values are applied as parameters of Equation 5 above. In FIG. 27, numbers in shaded boxes indicate indexes for distinguishing PDCCH candidates.

$Y_{p,-1}=n_{RNTI}=10$, $A_p=39829$, $D=65537$, n_CI($n_{CI}$)=0, $M_{p,s,max}^{(1)}=8$, $M_{p,s,max}^{(2)}=8$, $M_{p,s,max}^{(4)}=8$, $M_{p,s,max}^{(8)}=6$, $M_{p,s,max}^{(16)}=3$, $N_{CCE,p}=60$

Proposal #1: Different PDCCH candidates may correspond to different MLs based on a specific rule in the same aggregation level (AL). Here, PDCCH candidates corresponding to different MLs may consist of a mutual pair based on a specific rule. In addition, repetition/fraction transmission may be performed through the PDCCH candidate pair.

Hereinafter, a method of mapping different PDCCH candidates to different MLs will be described.

As an example of a specific rule for mapping different PDCCH candidates to different MLs in the same AL of the proposal, the following may be applied. For example, the specific rule may be based on a PDCCH candidate index.

Example-A1: Each PDCCH candidate may correspond to different ML based on the PDCCH candidate index (e.g., even/odd, lower half/higher half, etc.).

With respect to Example-A1, when the example of FIG. 27 is applied, PDCCH candidates corresponding to different MLs may be defined as shown in Tables 6 and 7 below.

Table 6 shows an example of configuring PDCCH candidates to different MLs based on the even/odd PDCCH candidate index (Example-A1-1).

[Table 6]

|  | ML1 | ML2 |
|---|---|---|
| AL 1 | 0, 2, 4, 6 | 1, 3, 5, 7 |
| AL 2 | 0, 2, 4, 6 | 1, 3, 5, 7 |
| AL 4 | 0, 2, 4, 6 | 1, 3, 5, 7 |
| AL 8 | 0, 2, 4 | 1, 3, 5 |
| AL 16 | 0, 2 | 1 |

Table 7 shows an example of configuring PDCCH candidates to different MLs based on the lower/higher half PDCCH candidate index (Example-A1-2).

[Table 7]

|  | ML1 | ML2 |
|---|---|---|
| AL 1 | 0, 1, 2, 3 | 4, 5, 6, 7 |
| AL 2 | 0, 1, 2, 3 | 4, 5, 6, 7 |
| AL 4 | 0, 1, 2, 3 | 4, 5, 6, 7 |
| AL 8 | 0, 1, 2 | 3, 4, 5 |
| AL 16 | 0 | 1, 2 |

For example, when it is not divided (i.e., the number of PDCCH candidates corresponding to each ML is not determined to be the same), the number of PDCCH candidates corresponding to a specific ML (e.g., first and/or last) may be determined through ceil operation/floor operation/round operation/mod operation, and the like. This method can be equally applied to an embodiment to be described later.

Example-A2: For the PDCCH candidate(s) of the largest AL (e.g., the first PDCCH candidate(s)) configured to the terminal (through a specific SS configuration and a specific CORESET configuration), each PDCCH candidate may correspond to a different ML based on a specific rule. And, for PDCCH candidate(s) of AL smaller than the largest AL (e.g., second PDCCH candidate(s)), a PDCCH candidate having the same CCE index as the CCE index corresponding to the PDCCH candidate of the largest AL may correspond to the same ML. Here, a PDCCH candidate that does not have the same CCE index as the PDCCH candidate of the largest AL may fixedly correspond to a specific ML.

Example-A2 above may be described as follows. PDCCH candidate(s) of the largest AL configured to the terminal (through specific SS configuration and specific CORESET configuration) may be referred to as first PDCCH candidate(s), and PDCCH candidate(s) of AL smaller than the largest AL may be referred to as second PDCCH candidate(s). Here, the first PDCCH candidate(s) may correspond to different MLs based on a specific rule. In addition, the second PDCCH candidate(s) may correspond to the ML corresponding to the first PDCCH candidate having the same CCE index. Here, the second PDCCH candidate(s) that does not have the same CCE index as the first PDCCH candidate(s) may be defined to correspond to a specific ML in a fixed manner.

In Example-A2, Example A-1 (e.g., Example-A1-1, Example-A1-2) described above as a specific rule for mapping the PDCCH candidate(s) of the largest AL to different MLs 2) may be applied.

With respect to Example-A2, when the example of FIG. 27 is applied, PDCCH candidates corresponding to different MLs may be defined as shown in Tables 8 and 9 below.

Table 8 shows an example that, after mapping the first PDCCH candidate(s) (i.e., PDCCH candidate(s) of the largest AL) to different MLs based on the even/odd PDCCH candidate index, the second PDCCH candidate corresponds to different MLs (Example-A2-1).

[Table 8]

|       | ML1             | ML2  |
|-------|-----------------|------|
| AL 16 | 0, 2            | 1    |
| AL 8  | 0, 1, 2, 3, 5   | 4    |
| AL 4  | 2, 3, 4, 5, 0, 1| 6, 7 |
| AL 2  | 1, 2, 3, 4, 0, 7| 5, 6 |
| AL 1  | 5, 6, 7, 0, 3, 4| 1, 2 |

In Table 8 (i.e., Example-A2-1), it is exemplified that the second PDCCH candidate(s) that do not have the same CCE index as the first PDCCH candidate(s) fixedly correspond to ML1. However, this is only an example and does not limit the technical scope of the present disclosure, and thus may be fixedly corresponding to ML2.

Table 9 shows an example that after mapping the first PDCCH candidate(s) (i.e., PDCCH candidate(s) of the largest AL) to different MLs based on the lower/higher half PDCCH candidate index, the second PDCCH candidate corresponds to different MLs (Example-A2-2).

[Table 9]

|       | ML1       | ML2        |
|-------|-----------|------------|
| AL 16 | 0         | 1, 2       |
| AL 8  | 2, 3, 5   | 0, 1, 4    |
| AL 4  | 4, 5, 0, 1| 2, 3, 6, 7 |
| AL 2  | 3, 4, 0, 7| 1, 2, 5, 6 |
| AL 1  | 0, 7, 3, 4| 1, 2, 5, 6 |

In Table 9 (i.e., Example-A2-2), it is exemplified that the second PDCCH candidate(s) that do not have the same CCE index as the first PDCCH candidate(s) fixedly correspond to ML1. However, this is only an example and does not limit the technical scope of the present disclosure, and thus may be fixedly corresponding to ML2.

Example-A3: For the PDCCH candidate(s) of the smallest AL (e.g., the first PDCCH candidate(s)) configured to the terminal (through a specific SS configuration and a specific CORESET configuration), Each PDCCH candidate may correspond to a different ML based on a specific rule. And, for PDCCH candidate(s) of AL larger than the smallest AL (e.g., second PDCCH candidate(s)), a PDCCH candidate having the same CCE index as the CCE index corresponding to the PDCCH candidate of the smallest AL may correspond to the same ML. Here, when CCE indices corresponding to PDCCH candidates included in different MLs in AL (n) are included in the CCE index constituting a specific PDCCH candidate of AL (n+1), it may be assumed that the the AL (n+1) specific PDCCH candidate is fraction transmission. And, the CCEs constituting the PDCCH candidate may be included in ML corresponding to the same CCE of AL (n), respectively. Also, a PDCCH candidate of a higher AL that does not have the same CCE index as the PDCCH candidate (s) of the lower AL may fixedly correspond to a specific ML. In order to apply the above proposal, PDCCH candidates of different ALs may be defined based on a nested structure.

In Example-A3, as a specific rule for mapping the PDCCH candidate(s) of the smallest AL to different MLs, Example A-1 (e.g., Example-A1-1, Example-A1-2) may be applied.

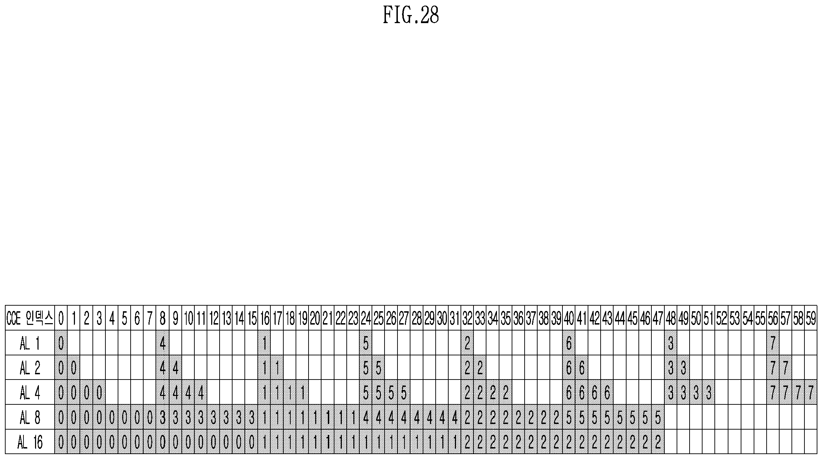

FIG. 28 illustrates a method of defining PDCCH candidates defined in a nested structure according to an embodiment of the present disclosure.

As shown in FIG. 28, the nested structure may mean a structure in which a lower AL PDCCH candidate may be included in a higher AL PDCCH candidate.

Table 10 shows an example that, after mapping the first PDCCH candidate(s) (i.e., PDCCH candidate(s) of the smallest AL) to different MLs based on the even/odd PDCCH candidate index, the second PDCCH candidate(s) correspond to different MLs (Example-A3-1).

[Table 10]

|        | ML1        | ML2        |
|--------|------------|------------|
| AL 1   | 0, 2, 4, 6 | 1, 3, 5, 7 |
| AL 2   | 0, 2, 4, 6 | 1, 3, 5, 7 |
| AL 4   | 0, 2, 4, 6 | 1, 3, 5, 7 |
| AL 8   | 0, 2, 3, 5 | 1, 4       |
| AL 16  | 0, 2       | 1          |

Table 10 shows an example that, after mapping the first PDCCH candidate(s) (i.e., PDCCH candidate(s) of the smallest AL) to different MLs based on the lower/higher half PDCCH candidate index, the second PDCCH candidate(s) correspond to different MLs (Example-A3-2).

[Table 11]

|        | ML1              | ML2        |
|--------|------------------|------------|
| AL 1   | 0, 1, 2, 3       | 4, 5, 6, 7 |
| AL 2   | 0, 1, 2, 3       | 4, 5, 6, 7 |
| AL 4   | 0, 1, 2, 3       | 4, 5, 6, 7 |
| AL 8   | 0, 1, 2          | 3, 4, 5    |
| AL 16  | 0, 1, 2 (fraction)            ||

In Table 11 (i.e., Example-A3-2), in the case of AL 16, CCEs of a single PDCCH candidate may correspond to different MLs. In this case, it may be assumed that each PDCCH candidate is a fractional transmission. For example, CCE indices 0 to 7 of PDCCH candidate 0 of AL 16 may correspond to ML1, and CCE indices 8 to 15 may correspond to ML2.

Example-A4: For PDCCH candidate(s) (e.g., first PDCCH candidate(s)) of a specific AL configured to the terminal (through a specific SS configuration and a specific CORESET configuration), each PDCCH candidate may correspond to different MLs based on a specific rule. In addition, for PDCCH candidate(s) of an AL smaller than the specific AL (e.g., second PDCCH candidate(s)), different PDCCHs may correspond to different MLs by applying the method of Example-A2 described above. In addition, for the PDCCH candidate(s) of the AL larger than the specific AL (e.g., the third PDCCH candidate(s)), different PDCCHs may correspond to different MLs by applying the method of Example-A3 described above.

In the above proposal, a specific AL may be configured/indicated/defined to the terminal by the base station based on a fixed rule and/or L1/L2 signaling.

Hereinafter, a method of configuring a PDCCH candidate pair for different MLs will be described. As described above, repetition/fraction transmission may be performed through the PDCCH candidate pair.

As an example of a specific rule constituting a PDCCH candidate pair for different MLs in the above-mentioned proposal, the following may be applied.

Example-B1: A PDCCH candidate pair may be configured based on (e.g., in ascending/descending order) a PDCCH candidate index included in each ML.

For Example-B1, when the example of FIG. 27 is applied, PDCCH candidate pairs may be defined in different ALs as shown in Tables 12 and 13 below.

Table 12 shows an example of defining pairs in the ascending order of the PDCCH candidate index for MLs defined based on the even/odd PDCCH candidate index (Example-B1-1).

[Table 12]

|  | Pair 0 | Pair 1 | Pair 2 | Pair 3 |
|---|---|---|---|---|
| AL 1 | PDCCH candidate 0 - PDCCH candidate 1 | PDCCH candidate 2 - PDCCH candidate 3 | PDCCH candidate 4 - PDCCH candidate 5 | PDCCH candidate 6 - PDCCH candidate 7 |
| AL 2 | PDCCH candidate 0 - PDCCH candidate 1 | PDCCH candidate 2 - PDCCH candidate 3 | PDCCH candidate 4 - PDCCH candidate 5 | PDCCH candidate 6 - PDCCH candidate 7 |
| AL 4 | PDCCH candidate 0 - PDCCH candidate 1 | PDCCH candidate 2 - PDCCH candidate 3 | PDCCH candidate 4 - PDCCH candidate 5 | PDCCH candidate 6 - PDCCH candidate 7 |
| AL 8 | PDCCH candidate 0 - PDCCH candidate 1 | PDCCH candidate 2 - PDCCH candidate 3 | PDCCH candidate 4 - PDCCH candidate 5 |  |
| AL 16 | PDCCH candidate 0 - PDCCH candidate 1 | PDCCH candidate 2 |  |  |

Table 13 shows an example of defining a pair in ascending order of the PDCCH candidate index for MLs defined based on the lower/higher half PDCCH candidate index (Example-B1-2) .

[Table 13]

|  | Pair 0 | Pair 1 | Pair 2 | Pair 3 |
|---|---|---|---|---|
| AL 1 | PDCCH candidate 0 - PDCCH candidate 4 | PDCCH candidate 1 - PDCCH candidate 5 | PDCCH candidate 2 - PDCCH candidate 6 | PDCCH candidate 3 - PDCCH candidate 7 |
| AL 2 | PDCCH candidate 0 - PDCCH candidate 4 | PDCCH candidate 1 - PDCCH candidate 5 | PDCCH candidate 2 - PDCCH candidate 6 | PDCCH candidate 3 - PDCCH candidate 7 |
| AL 4 | PDCCH candidate 0 - PDCCH candidate 4 | PDCCH candidate 1 - PDCCH candidate 5 | PDCCH candidate 2 - PDCCH candidate 6 | PDCCH candidate 3 - PDCCH candidate 7 |
| AL 8 | PDCCH candidate 0 - PDCCH candidate 3 | PDCCH candidate 1 - PDCCH candidate 4 | PDCCH candidate 2 - PDCCH candidate 5 |  |
| AL 16 | PDCCH candidate 0 - PDCCH candidate 2 | PDCCH candidate 1 |  |  |

In the above-described example, in the case of a PDCCH candidate for which a pair is not defined, it may be assumed that DCI is transmitted through a single PDCCH candidate.

Proposal #2: PDCCH candidate(s) corresponding to different CORESET configurations may correspond to different MLs. The PDCCH candidates corresponding to the different MLs may consist of a mutual pair based on a specific rule. And, repetition/fraction transmission may be performed through the PDCCH candidate pair.

Hereinafter, a method of configuring a PDCCH candidate pair for different MLs will be described.

As an example of a specific rule configuring a PDCCH candidate pair for different MLs of the above proposal, the following may be applied.

Example-A1: A PDCCH candidate pair may be configured based on (e.g., in ascending/descending order) the PDCCH candidate index (in the same AL) of each ML. Each PDCCH candidate constituting the PDCCH candidate pair may correspond to different CORESET configurations.

For example, PDCCH candidate i (i is a PDCCH candidate index) corresponding to CORESET p (in the same AL) may be set/configured in pairs with PDCCH candidate i corresponding to CORESET q (p and q are not the same).

Table 14 exemplifies a method of configuring a PDCCH candidate pair in the same AL for different CORESET configurations having the structure of FIG. 27 (Example-A1-1).

[Table 14]

|  | Pair 0 | Pair 1 | Pair 2 | Pair 3 | Pair 4 | Pair 5 | Pair 6 | Pair 7 |
|---|---|---|---|---|---|---|---|---|
| AL 1 | 0-0 | 1-1 | 2-2 | 3-3 | 4-4 | 5-5 | 6-6 | 7-7 |
| AL 2 | 0-0 | 1-1 | 2-2 | 3-3 | 4-4 | 5-5 | 6-6 | 7-7 |
| AL 4 | 0-0 | 1-1 | 2-2 | 3-3 | 4-4 | 5-5 | 6-6 | 7-7 |
| AL 8 | 0-0 | 1-1 | 2-2 | 3-3 | 4-4 | 5-5 |  |  |
| AL 16 | 0-0 | 1-1 | 2-2 |  |  |  |  |  |

In Table 14, the number of each item may mean a PDCCH candidate index.

Hereinafter, a method for improving performance when overlap/collision occurs within a PDCCH candidate pair will be described.

In the above-mentioned proposal #2, when overlap/collision occurs between PDCCH candidates corresponding to different CORESETs constituting a pair, and/or a specific candidate(s) among the pair overlap/collide with other DL/UL channel/signal, the following method may be applied to reduce the number of blind detections (BD) of the terminal and to increase BD accuracy.

Example-B1: For a specific candidate among the overlapping PDCCH candidates, puncturing and/or rate matching and/or muting of an overlapping region may be performed.

Example-B2: For a specific candidate among overlapping PDCCH candidates, the terminal may assume that the specific PDCCH candidate is not transmitted, and may not perform BD. In this case, the terminal may assume that transmission is possible only from other PDCCH candidates except for the specific PDCCH candidate, or may assume that it is single TRP transmission.

Example-B3: When defining a PDCCH candidate pair, after excluding a specific PDCCH candidate(s) among overlapping PDCCH candidate(s), a pair may be defined between nonoverlapping PDCCH candidates. For example, in the case of overlap/collision between PDCCH candidates in pair 2/3 of AL 8 in Example-A1-1 of proposal #2 (see Table 14), after excluding PDCCH candidates 2/3 corresponding to a specific CORESET, a PDCCH candidate pair as shown in Table 15 below may be defined.

[Table 15]

|  | Pair 0 | Pair 1 | Pair 2 | Pair 3 | Pair 4 | Pair 5 |
|---|---|---|---|---|---|---|
| AL 8 | 0-0 | 1-1 | 2-4 | 3-5 | 4 | 5 |

In the above-described example-B1/B2/B3/ proposal, specific candidate(s) may mean PDCCH candidate(s) corresponding to a specific CORESET configuration (e.g., lowest/highest CORESET ID), and/or PDCCH candidate(s) corresponding to a specific TCI state (e.g., first/second/last/lowest/highest TCI state (ID)), and/or self-decodable (and/or non-self-decodable) PDCCH candidate(s).

In the above-mentioned proposed methods, for convenience of explanation, two MLs through which different PDCCH/DCI are transmitted have been mainly described, but the technical scope of the present disclosure is not limited, and the extension may be applied in case of two or more MLs are configured.

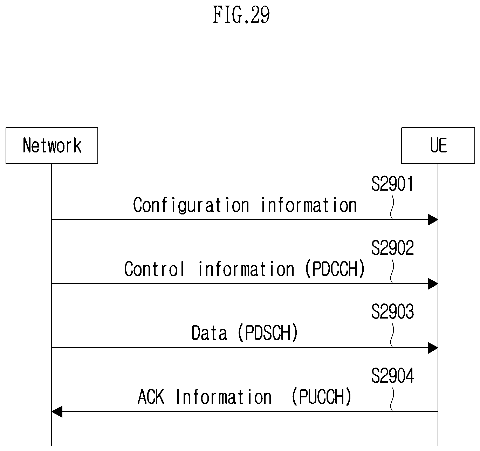

FIG. 29 illustrates a signaling method for PDCCH transmission/reception according to an embodiment of the present disclosure.

FIG. 29 illustrates signaling between a network and a UE to which the above-described proposed method (e.g., Method #1 (Proposal #1 / Proposal #2) / Method #2 (Proposal #1) / Method #3 (Proposal #1 / Proposal #2 / Proposal) #3)/Method #4 (Proposition #1/Proposal #2)/Method #5 (Proposal #1/Proposal #2), etc.) may be applied. Here, UE/Network is an example, and may be substituted for various devices. FIG. 29 is only for convenience of description, and does not limit the scope of the present disclosure. Also, some step(s) shown in FIG. 29 may be omitted depending on circumstances and/or settings. In addition, in the operation of the Network/UE of FIG. 29, the above-described descriptions may be referenced/used.

In the following description, the Network may be one base station including a plurality of TRPs, and may be one cell including a plurality of TRPs. Alternatively, the network may include a plurality of remote radio heads (RRHs)/remote radio units (RRUs). For example, an ideal/non-ideal) backhaul may be configured between TRP 1 and TRP 2 constituting the network. In addition, the following description is described based on a plurality of TRPs, but this may be equally extended and applied to transmission through a plurality of panels/cells, and may also be extended and applied to transmission through a plurality of RRHs/RRUs.

In addition, although described with reference to "TRP" in the following description, as described above, "TRP" is a panel, an antenna array, a cell (e.g., macro cell / small cell) / pico cell, etc.), transmission point (TP), base station (base station, gNB, etc.) may be replaced and applied. As described above, the TRP may be classified according to information (e.g., index, ID) on the CORESET group (or CORESET pool). As an example, when one terminal is configured to perform transmission/reception with a plurality of TRPs (or cells), this may mean that a plurality of CORESET groups (or CORESET pools) are configured for one terminal. The configuration of such a CORESET group (or CORESET pool) may be performed through higher layer signaling (e.g., RRC signaling, etc.). In addition, the base station may mean a generic term for an object that performs transmission and reception data with the terminal. For example, the base station may be a concept including one or more TPs, one or more TRPs, and the like. In addition, the TP and/or TRP may include a panel of the base station, a transmission and reception unit, and the like.

The UE may receive configuration information from the Network (S2901). Similarly, the Network (or BS) may transmit configuration information to the UE. The configuration information may include system information (SI) and/or scheduling information and/or configuration related to beam management (BM). For example, the configuration information may include information related to network configuration (e.g., TRP configuration), resource allocation related to multi-TRP-based transmission and reception, and the like. For example, the configuration information may include one or more CORESET-related configurations and/or one or more search space set (SS)-related configurations. The configuration information may be transmitted through higher layer signaling (e.g., RRC or MAC CE). In addition, when the configuration information is pre-defined or pre-configured, the corresponding step may be omitted.

For example, the configuration information may include parameter(s) for applying the proposed method (e.g., method #1 (proposal #1/ proposal #2)/ method #2 (proposal #1)/ method #3 (proposal #1/ proposal #2/ Proposal #3)/ Method #4 (proposal #1/ poposal #2) / Method #5 (poposal #1/ poposal #2), etc.). For example, the configuration information may include resource information for a control channel (e.,.PDCCH)/information related to repetition/fraction transmission of the control channel. For example, the resource information for the control channel includes an offset value related to resource configuration/reference information for applying an offset/window configuration information (e.g., window value, size, etc.)/ parameter(s) for indicating a resource region related to repetition/fraction transmission of the control channel/ resource region candidate (e.g., MLC) related information including a plurality of resource regions (e.g., ML) (e.g., the number of MLCs in the BWP / MLC size, etc.)/ information for resource region reconfiguration, and the like.

In addition, the configuration information may include information on TCI state(s) and/or QCL RS(s) for one or more CORESETs and/or one or more SSs.

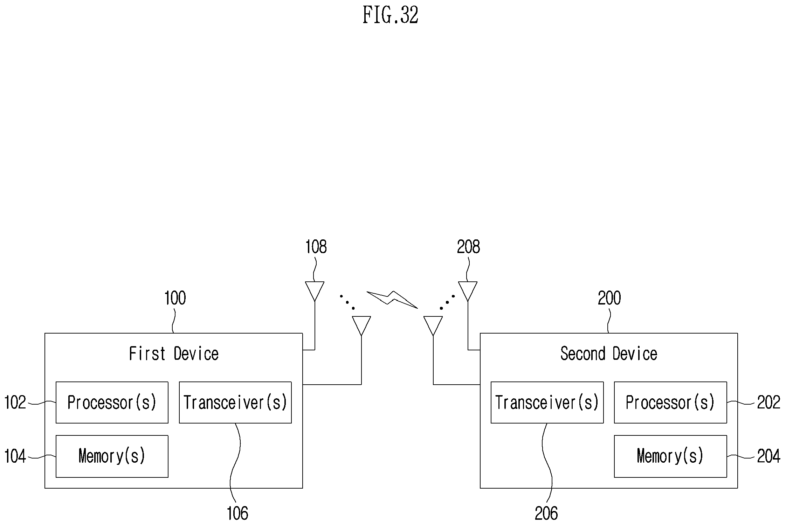

For example, the operation of the UE receiving the configuration information from the network in step S2901 described above may be implemented by the apparatus of FIG. 32 to be described below. For example, referring to FIG. 32, the one or more processors 102 may control one or more transceivers 106 and/or one or more memories 104 to receive the configuration information, and the one or more transceivers 106 may receive the configuration information from the network.

The UE may receive control information from the network (S2902). Similarly, the Network (or BS) may transmit control information to the UE. The control information may be received through a control channel (e.g., PDCCH). For example, the control information may be DCI. In the case of single DCI-based cooperative transmission, the control information may be transmitted through/using the representative TRP among TRPs constituting the network, and in the case of multiple DCI-based cooperative transmission, the control information may be transmitted through/using each TRP constituting the network. For example, the control information may include information on TCI state(s) and/or QCL RS(s) and/or DMRS port(s).

As described above, the PDCCH (DCI) may be repeatedly transmitted in a plurality of monitoring locations (MLs), wherein the plurality of MLs may be configured based on one or more control resource sets (CORESETs) and one or more search space sets (SS sets). More specifically, a plurality of MLs may be configured according to the above-described proposed methods.

In addition, the plurality of resource regions (ML) may be related/associated with different quasi co-location (QCL) reference signals (RS) and/or different transmission configuration indicator (TCI) states.

For example, the control information may be received based on the above-described proposed method (e.g., method #1 (proposal #1/ proposal #2)/ method #2 (proposal #1)/ method #3 (proposal #1/ proposal #2/) Proposal #3)/ method #4 (proposal #1/proposal #2)/ method #5 (proposal #1/proposal #2), etc.). For example, the control information may be received (/transmitted) by repetition/fraction in a resource region (e.g., ML) configured based on the above-described proposed method. For example, the resource region (ML) may mean frequency resources/time resources/frequency and time resources. For example, the resource region (e.g., ML) may be configured based on an offset value/ a window value/ a parameter for indicating a resource region based on a specific resource region. For example, a plurality of MLs may be configured in one MO, and/or a plurality of MOs may be configured in one slot, and a plurality of MLs may be configured based on the plurality of MOs and a specific offset. For example, a plurality of MLs may be configured in the form of repeating or dividing a frequency resource region of one CORESET configuration. For example, a plurality of MLs may be configured by dividing the frequency domain of a single CORESET configuration based on BWP/specific CORESET-related frequency domain/precoder granularity/CORESET configuration frequency resource bitmap information, and the like. For example, information necessary for configuring a resource region (e.g., ML) related to repetition/fraction transmission of the control channel may be received through L1/L2 signaling.

For example, as described in Method 5 above, a plurality of PDCCH candidates may be configured in CORESET, and may correspond to resource regions related to repetition/fraction transmission of different control channels, respectively (e.g., ML). For example, each PDCCH candidate may correspond to a resource region (e.g., ML) related to repetition/fraction transmission of different control channels based on the PDCCH candidate index/aggregation level/CCE index. For example, if PDCCH candidates corresponding to the same index (or CCEs corresponding to the same PDCCH candidate) correspond to different MLs, it may be recognized that fraction transmission is performed. For example, a pair between PDCCH candidates corresponding to a resource region (e.g., ML) related to repetition/fraction transmission of different control channels may be configured. For example, a pair between PDCCH candidates corresponding to each index may be configured. For example, if overlap/collision occurs within a configured pair, a pair between candidates that is punctured/rate matched/muted or does not overlap may be configured.

For example, the control information may be received in a resource region (e.g., ML) related to repetition/fraction transmission of a configured control channel. For example, different control information may be received in different MOs, and the control information may be repeated/divided and received in a plurality of resource regions (e.g., MLs) included in one MO. For example, as described in method 4 above, when a resource region (e.g., ML) related to repetition/fraction transmission of a control channel overlaps (collides) with a resource region of other DL/UL channel/singal, the control channel may not be received in the overlapping area. Alternatively, a resource region (e.g., ML) related to repetition/fraction transmission in the overlapping region may be shifted/changed based on a specific rule.

For example, the operation of the UE receiving the control information from the network in step S2902 described above may be implemented by the apparatus of FIG. 32 to be described below. For example, referring to FIG. 32, one or more processors 102 may control one or more transceivers 106 and/or one or more memories 104 to receive the control information, and the one or more transceivers 106 may receive the control information from a network.

The UE may receive data (i.e., PDSCH) from the Network (M115). Similarly, the Network (or BS) may transmit data (i.e., PDSCH) to the UE. For example, the data may be received based on information configured/indicated in steps S2901 / S2902 (e.g., control information, etc.).

For example, the operation of the UE receiving the data from the network in step S2093 described above may be implemented by the apparatus of FIG. 32 to be described below. For example, referring to FIG. 32, the one or more processors 102 may control one or more transceivers 106 and/or one or more memories 104 to receive the data, and the one or more transceivers 106 may receive the data from the network.

The UE may transmit acknowledgment (Ack) information to the network in response to the data (i.e., PDSCH) received in step S2903 (S2904).

Here, the ACK information may be referred to as ACK/NACK (non-acknowledgement), and also, the ACK information may be referred to as HARQ-ACK information. In addition, ACK information may be transmitted through PUCCH.

In the case of the above-described multiple TRP transmission, the UE may transmit ACK information to a single TRP as a representative, and may transmit ACK information to all of the multiple TRPs that have transmitted data.

As described above, when the PDCCH is repeatedly transmitted in a plurality of resource regions (MLs), the resource of the PUCCH may be defined based on information on a control channel element (CCE) within any one resource region (ML) of the plurality of resource regions (MLs) and the PUCCH resource indicator in the control information (DCI).

Here, one ML may be determined based on a CORESET having the lowest or highest CORESET identifier (ID) among one or more CORESETs. Also, one ML may be determined based on an SS having the lowest or highest SS identifier (ID) among the one or more SSs.

Also, the information on the CCE may be the total number of CCEs, and may be the first CCE index in the one ML.

As mentioned above, signaling and operation between the above-described Network/UE (e.g., Method #1 (Proposal #1/ Proposal #2)/ Method #2 (Proposal #1)/ Method #3 (Proposal #1/ Proposal #2/ Proposal #3)/ Method #4 (Proposal #1/ Proposal #2) / Method #5 (Proposal #1/ Proposal #2)/ FIG. 29 etc.) may be implemented by an apparatus (e.g., Fig. 32). For example, the network (e.g., TRP 1 / TRP 2) may correspond to the first wireless device, the UE may correspond to the second wireless device, and vice versa may be considered in some cases.

For example, signaling and operation between the aforementioned Network/UE (e.g., Method #1 (Proposal #1/ Proposal #2)/ Method #2 (Proposal #1)/ Method #3 (Proposal #1/ Proposal #2/ Proposal #3)/ Method #4 (Proposal #1/ Proposal #2) / Method #5 (Proposal #1/ Proposal #2)/ FIG. 29 etc.) may be processed by one or more processors of FIG. 32 (e.g., 102 and 202), and signaling and operation between the aforementioned Network/UE (e.g., Method #1 (Proposal #1/ Proposal #2)/ Method #2 (Proposal #1)/ Method #3 (Proposal #1/ Proposal #2/ Proposal #3)/ Method #4 (Proposal #1/ Proposal #2) / Method #5 (Proposal #1/ Proposal #2)/ FIG. 29 etc.) may be stored in a memory (e.g., one or more memories of FIG. 32 (e.g., 104, 204)), in the form of an instruction/program (e.g., instruction, executable code) for driving one or more processors of FIG. 32 (e.g., 102, 202).

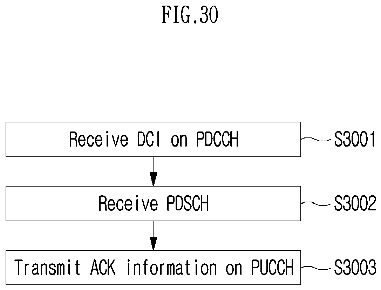

FIG. 30 is a diagram illustrating an operation of a terminal in a method for receiving a PDCCH according to an embodiment of the present disclosure.

FIG. 30 illustrates the operation of a terminal based on methods #1 to #5 above. The example of FIG. 30 is for convenience of description, and does not limit the scope of the present disclosure. Some step(s) illustrated in FIG. 30 may be omitted depending on circumstances and/or configurations. In addition, the terminal in FIG. 30 is only one example, and may be implemented as the device illustrated in FIG. 32 below. For example, the processor 102/202 of FIG. 32 may control to transmit/receive a channel/signal/data/information using the transceiver 106/206, and control to store a channel/signal/Data/information, etc. to be transmitted or received in the memory 104/204.

Further, the operations of FIG. 30 may be processed by one or more processors (102 , 202) of FIG. 32. In addition, the operation of FIG. 30 may be stored in a memory (e.g., one or more memories 104 , 204 of FIG. 32 ), in the form of an instruction/program (e.g., instruction, executable code) for driving at least one processor of FIG. 32 (e.g., 102 , 202 ).

The terminal receives DCI on the PDCCH from the base station (S3001).

Here, the PDCCH (DCI) may be repeatedly transmitted in a plurality of monitoring locations (ML), wherein the plurality of MLs may be configured based on at least one control resource set (CORESET) and at least one search space set (SS). More specifically, a plurality of MLs may be configured according to the above-described proposed methods (e.g., Method #1 to Method #5).

A plurality of resource regions (ML) may be related/associated with different quasi co-location (QCL) reference signals (RS) and/or different transmission configuration indicator (TCI) states.

According to the above-described method #1, the plurality of MLs may be configured in the same time resource in the time domain and configured in different frequency resources in the frequency domain, and the size of each frequency resource of the plurality of MLs may be configured to be the same as the frequency resource of a specific CORESET. Here, the locations of the plurality of MLs in the frequency domain may be configured based on an offset value from a predetermined reference.

Also, according to method #2 described above, the plurality of MLs may be configured in the same time resource in the time domain and may be configured in different frequency resources in the frequency domain. A bandwidth portion (BWP) may be divided into a plurality of monitoring location candidates (MLCs), and the plurality of MLs may be configured among the plurality of MLCs.

In addition, according to method #3 described above, the plurality of MLs may be configured in different time resources in the time domain and configured in the same frequency resource in the frequency domain. Here, the locations of the plurality of MLs in the time domain may be configured based on a plurality of monitoring occasions (MOs) configured by the at least one CORESET and the at least one SS and an offset value from a predetermined reference. Also, MOs included in a predetermined window among a plurality of MOs configured by the at least one CORESET and the at least one SS may be configured as the plurality of MLs.

In addition, according to the above-described method #4, the resource location of the one or more MLs may be shifted in the time domain and/or in the frequency domain according to a predetermined rule based on the collision of one or more MLs among the plurality of MLs with other uplink or downlink signal. In addition, it may be assumed that the PDCCH is not transmitted in the one or more MLs based on the collision of one or more MLs among the plurality of MLs with other uplink or downlink signal.

On the other hand, although not illustrated in FIG. 30, the terminal may receive, from the base station, configuration information according to the above-described proposed methods (e.g., methods #1 to #5) for configuring a plurality of monitoring locations (MLs), so that the PDCCH may be repeatedly transmitted in a plurality of MLs.

The terminal receives the PDSCH (i.e., downlink data) from the base station (S3002).

Here, the PDSCH may be scheduled by DCI of S3001 and transmitted based on DCI.

The terminal transmits acknowledgment (ACK) information to the base station in a physical uplink control channel (PUCCH) in response to the PDSCH (S3003).

Here, the ACK information may be referred to as ACK/NACK (non-acknowledgement), and also, the ACK information may be referred to as HARQ-ACK information.

In the case of the above-described multiple TRP transmission, the UE may transmit ACK information to a single TRP as a representative, and may transmit ACK information to all of the multiple TRPs that have transmitted data.

As described above, when the PDCCH is repeatedly transmitted in a plurality of resource regions (MLs), the resource of the PUCCH may be defined based on information on a control channel element (CCE) within any one resource region (ML) of the plurality of resource regions (MLs) and the PUCCH resource indicator in the control information (DCI).

Here, one ML may be determined based on a CORESET having the lowest or highest CORESET identifier (ID) among at least one CORESET. Also, one ML may be determined based on an SS having the lowest or highest SS identifier (ID) among the at least one SS.

Also, the information on the CCE may be the total number of CCEs, and may be the first CCE index in the one ML.

Although not specifically described in the description of FIG. 30, the descriptions in the aboved proposed methods #1 to #5 may be applied to the operation of FIG. 30.

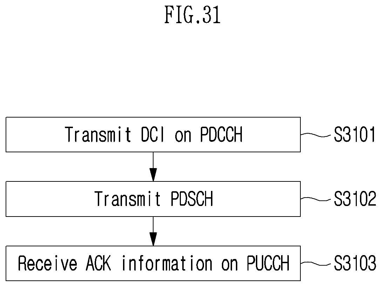

FIG. 31 is a diagram illustrating an operation of a base station in a method for transmitting a PDCCH according to an embodiment of the present disclosure.

FIG. 31 illustrates the operation of a base station based on methods #1 to #5 above. The example of FIG. 31 is for convenience of description, and does not limit the scope of the present disclosure. Some step(s) illustrated in FIG. 31 may be omitted depending on circumstances and/or configurations. In addition, the base station in FIG. 31 is only one example, and may be implemented as the device illustrated in FIG. 32 below. For example, the processor 102/202 of FIG. 32 may control to transmit/receive a channel/signal/data/information using the transceiver 106/206, and control to store a channel/signal/Data/information, etc. to be transmitted or received in the memory 104/204.

Further, the operations of FIG. 31 may be processed by one or more processors (102 , 202) of FIG. 32. In addition, the operation of FIG. 31 may be stored in a memory (e.g., one or more memories 104 , 204 of FIG. 32 ), in the form of an instruction/program (e.g., instruction, executable code) for driving at least one processor of FIG. 32 (e.g., 102 , 202 ).

The base station transmits DCI on the PDCCH to a terminal (S3101).

Here, the PDCCH (DCI) may be repeatedly transmitted in a plurality of monitoring locations (ML), wherein the plurality of MLs may be configured based on at least one control resource set (CORESET) and at least one search space set (SS). More specifically, a plurality of MLs may be configured according to the above-described proposed methods (e.g., Method #1 to Method #5).

A plurality of resource regions (ML) may be related/associated with different quasi co-location (QCL) reference signals (RS) and/or different transmission configuration indicator (TCI) states.

According to the above-described method #1, the plurality of MLs may be configured in the same time resource in the time domain and configured in different frequency resources in the frequency domain, and the size of each frequency resource of the plurality of MLs may be configured to be the same as the frequency resource of a specific CORESET. Here, the locations of the plurality of MLs in the frequency domain may be configured based on an offset value from a predetermined reference.

Also, according to method #2 described above, the plurality of MLs may be configured in the same time resource in the time domain and may be configured in different frequency resources in the frequency domain. A bandwidth portion (BWP) may be divided into a plurality of monitoring location candidates (MLCs), and the plurality of MLs may be configured among the plurality of MLCs.

In addition, according to method #3 described above, the plurality of MLs may be configured in different time resources in the time domain and configured in the same frequency resource in the frequency domain. Here, the locations of the plurality of MLs in the time domain may be configured based on a plurality of monitoring occasions (MOs) configured by the at least one CORESET and the at least one SS and an offset value from a predetermined reference. Also, MOs included in a predetermined window among a plurality of MOs configured by the at least one CORESET and the at least one SS may be configured as the plurality of MLs.

In addition, according to the above-described method #4, the resource location of the one or more MLs may be shifted in the time domain and/or in the frequency domain according to a predetermined rule based on the collision of one or more MLs among the plurality of MLs with other uplink or downlink signal. In addition, it may be assumed that the PDCCH is not transmitted in the one or more MLs based on the collision of one or more MLs among the plurality of MLs with other uplink or downlink signal.

On the other hand, although not illustrated in FIG. 31, the base station may transmit, to the terminal, configuration information according to the above-described proposed methods (e.g., methods #1 to #5) for configuring a plurality of monitoring locations (MLs), so that the PDCCH may be repeatedly transmitted in a plurality of MLs.

The base station transmits the PDSCH (i.e., downlink data) to the terminal (S3102).

Here, the PDSCH may be scheduled by DCI of S3001 and transmitted based on DCI.

The base station receives acknowledgment (ACK) information from the terminal in a physical uplink control channel (PUCCH) in response to the PDSCH (S3103).

Here, the ACK information may be referred to as ACK/NACK (non-acknowledgement), and also, the ACK information may be referred to as HARQ-ACK information.

As described above, when the PDCCH is repeatedly transmitted in a plurality of resource regions (MLs), the resource of the PUCCH may be defined based on information on a control channel element (CCE) within any one resource region (ML) of the plurality of resource regions (MLs) and the PUCCH resource indicator in the control information (DCI).

Here, one ML may be determined based on a CORESET having the lowest or highest CORESET identifier (ID) among at least one CORESET. Also, one ML may be determined based on an SS having the lowest or highest SS identifier (ID) among the at least one SS.

Also, the information on the CCE may be the total number of CCEs, and may be the first CCE index in the one ML.

Although not specifically described in the description of FIG. 30, the descriptions in the aboved proposed methods #1 to #5 may be applied to the operation of FIG. 30.

General Device to which the Present Disclosure may be applied

FIG. 32 illustrates a block diagram of a wireless communication device according to an embodiment of the present disclosure.

In reference to FIG. 32, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device XXX, YYY of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.   A method for receiving a physical downlink control channel (PDCCH) in a wireless communication system, the method performed by a terminal comprising:

     receiving, from a base station, downlink control information (DCI) for scheduling a physical downlink shared channel (PDSCH) in the PDCCH;
     receiving the PDSCH from the base station; and
     transmitting, to the base station, acknowledgment (ACK) information in a physical uplink control channel (PUCCH), in response to the PDSCH,
     wherein the PDCCH is repeatedly transmitted on a plurality of monitoring locations (MLs),
     wherein the plurality of MLs are configured based on at least one control resource set (CORESET) and at least one search space set (SS), and
     wherein a resource of the PUCCH is determined based on information on a control channel element (CCE) in one ML among the plurality of MLs and a PUCCH resource indicator in the DCI.

2.   The method of claim 1,
     wherein the one ML is determined based on a CORESET having a lowest or highest CORESET identifier (ID) among the at least one CORESET.

3.   The method of claim 1,
     wherein the one ML is determined based on a SS having a lowest or highest SS identifier (ID) among the at least one SS.

4.   The method of claim 1,

wherein the information on the CCE is a total number of CCEs.

5. The method of claim 1,
wherein the information on the CCE is a first CCE index in the one ML.

6. The method of claim 1,
wherein the plurality of MLs is associated with different quasi co-location (QCL) reference signals (RSs) and/or different transmission configuration inficator (TCI) states.

7. The method of claim 1,
wherein the plurality of MLs are configured in the same time resource in a time domain and are configured in different frequency resources in a frequency domain, and
wherein a size of each frequency resource of the plurality of MLs is configured to be equal to a frequency resource of a specific CORESET.

8. The method of claim 7,
wherein a location in a frequency domain of the plurality of MLs is configured based on an offset value from a pre-determined reference.

9. The method of claim 1,

wherein the plurality of MLs are configured in a same time resource in a time domain and are configured in different frequency resources in a frequency domain, and
wherein a bandwidth part (BWP) is divided into a plurality of monitoring location candidates (MLCs) and the plurality of MLs are configured among the plurality of MLCs.

10. The method of claim 1,

wherein the plurality of MLs are configured in a same time resource in a time domain and are configured in different frequency resources in a frequency domain, and
wherein the plurality of MLs are configured in a frequency resource of a specific CORESET.

11. The method of claim 10,

wherein a bandwidth part (BWP) and/or the frequency resource of a specific CORESET is divided into a plurality of frequency resource units, and
wherein the plurality of MLs are configured in a frequency resource of a specific CORESET, as a plurality of frequency resource units are corresponded to the plurality of MLs.

12. The method of claim 1,
wherein the plurality of MLs are configured in different time resources in a time domain and are configured in a same frequency resource in a frequency domain.

13. The method of claim 12,
wherein a location in a time domain of the plurality of MLs is configured based on an offset value from a pre-determined reference and a plurality of monitoring occasions (MOs) configured by the at least one CORESET and the at least one SS.

14. The method of claim 12,
wherein MOs included in a pre-determined window among a plurality of MOs configured by the at least one CORESET and the at least one SS are configured as the plurality of MLs.

15. The method of claim 1,
wherein, based on at least one ML among the plurality of MLs being collided with another uplink or downlink signal, a resource location of the at least one ML is moved in a time domain and/or a frequency domain according to a pre-determined rule.

16. The method of claim 1,

wherein, based on at least one ML among the plurality of MLs being collided with another uplink or downlink signal, it is assumed that the PDCCH is not transmitted in the at least one ML.

17. A terminal of receiving a physical downlink control channel (PDCCH) in a wireless communication system, the terminal comprising:

at least one transceiver for transmitting and receiving a wireless signal; and
at least one processor for controlling the at least one transceiver,
wherein the at least one processor configured to:

receive, from a base station, downlink control information (DCI) for scheduling a physical downlink shared channel (PDSCH) in the PDCCH;
receive the PDSCH from the base station; and
transmit, to the base station, acknowledgment (ACK) information in a physical uplink control channel (PUCCH), in response to the PDSCH,
wherein the PDCCH is repeatedly transmitted on a plurality of monitoring locations (MLs),
wherein the plurality of MLs are configured based on at least one control resource set (CORESET) and at least one search space set (SS), and
wherein a resource of the PUCCH is determined based on information on a control channel element (CCE) in one ML among the plurality of MLs and a PUCCH resource indicator in the DCI.

18. At least one non-transitory computer-readable medium storing at least one instruction,
wherein the at least one instruction executable by at least one processor controls a device receiving a physical downlink control channel (PDCCH) to:

receive, from a base station, downlink control information (DCI) for scheduling a physical downlink shared channel (PDSCH) in the PDCCH;
receive the PDSCH from the base station; and
transmit, to the base station, acknowledgment (ACK) information in a physical uplink control channel (PUCCH), in response to the PDSCH,
wherein the PDCCH is repeatedly transmitted on a plurality of monitoring locations (MLs),
wherein the plurality of MLs are configured based on at least one control resource set (CORESET) and at least one search space set (SS), and
wherein a resource of the PUCCH is determined based on information on a control channel element (CCE) in one ML among the plurality of MLs and a PUCCH resource indicator in the DCI.

19. A processing apparatus configured to control a terminal for receiving a physical downlink control channel (PDCCH) in a wireless communication system, the processing apparatus comprising:

at least one processor; and
at least one computer memory operably connected to the at least one processor and storing instructions that, based on being executed by the at least one processor, perform operations comprising:

receiving, from a base station, downlink control information (DCI) for scheduling a physical downlink shared channel (PDSCH) in the PDCCH;
receiving the PDSCH from the base station; and
transmitting, to the base station, acknowledgment (ACK) information in a physical uplink control channel (PUCCH), in response to the PDSCH,
wherein the PDCCH is repeatedly transmitted on a plurality of monitoring locations (MLs),
wherein the plurality of MLs are configured based on at least one control resource set (CORESET) and at least one search space set (SS), and
wherein a resource of the PUCCH is determined based on information on a control channel element (CCE) in one ML among the plurality of MLs and a PUCCH resource indicator in the DCI.

20. A method for transmitting a physical downlink control channel (PDCCH) in a wireless communication system, the method performed by a base station comprising:

transmitting, to a terminal, downlink control information (DCI) for scheduling a physical downlink shared channel (PDSCH) in the PDCCH;

transmitting the PDSCH to the terminal; and

receiving, from the terminal, acknowledgment (ACK) information in a physical uplink control channel (PUCCH), in response to the PDSCH,

wherein the PDCCH is repeatedly transmitted on a plurality of monitoring locations (MLs),

wherein the plurality of MLs are configured based on at least one control resource set (CORESET) and at least one search space set (SS), and

wherein a resource of the PUCCH is determined based on information on a control channel element (CCE) in one ML among the plurality of MLs and a PUCCH resource indicator in the DCI.

21. A base station of transmitting a physical downlink control channel (PDCCH) in a wireless communication system, the base station comprising:

at least one transceiver for transmitting and receiving a wireless signal; and

at least one processor for controlling the at least one transceiver,

wherein the at least one processor configured to:

transmit, to a terminal, downlink control information (DCI) for scheduling a physical downlink shared channel (PDSCH) in the PDCCH;

transmit the PDSCH to the terminal; and

receive, from the terminal, acknowledgment (ACK) information in a physical uplink control channel (PUCCH), in response to the PDSCH,

wherein the PDCCH is repeatedly transmitted on a plurality of monitoring locations (MLs),

wherein the plurality of MLs are configured based on at least one control resource set (CORESET) and at least one search space set (SS), and

wherein a resource of the PUCCH is determined based on information on a control channel element (CCE) in one ML among the plurality of MLs and a PUCCH resource indicator in the DCI.

FIG.1

FIG.2

Radio Frame 10ms

Subframe 1ms

| 0 | 1 | 2 | 3 | 4 | 5 | 6 | 7 | 8 | 9 |

}Fixed Size

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

}Size depends
on subcarrier
spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

## FIG.4

## FIG.5

Resource grid

A carrier
(up to 3300 subcarriers,i,e.,275 RBs)

A BWP

1 RB=12 subcarrier

1 RE

1 subcarrier

1 Symbol

l=0 .....

k=0

FIG.6

| INITIAL CELL SEARCH | SYSTEM INFORMATION RECEPTION | RANDOM ACCESS PROCEDURE | GENERAL DL/UL Tx/Rx |
|---|---|---|---|

PSS/SSS& [DLRS]& PBCH — S601

PDCCH/ PDSCH (BCCH) — S602

PRACH — S603

PDCCH/ PDSCH — S604

PUSCH — S605

PDCCH/ PDSCH — S606

PDCCH/ PDSCH — S607

PUSCH/ PUCCH — S608

· DL/UL ACK/NACK
· UE CQI/PMI RI REPORT
  USING PUSCH AND PUCCH

EP 4 132 181 A1

# FIG.7

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

...

FIG.8

(a)                    (b)

FIG.9

(a)                                    (b)

FIG.10

Bitmap for frequency domain
resource allocation for CORESET
(frequencyDomainResources)

## FIG.11

BWP

ML#2

ML#1

N

CORESET #1

offset = 7M

M=N/2

FIG.12

(a)                    (b)

FIG.13

FIG.14

FIG.15

Bitmap for frequency domain resource allocation for CORESET
(frequencyDomainResources)

BWP

|       | Case 1 | Case 2 | Case 3 |
|-------|--------|--------|--------|

▨ : Resources for ML1　　▭ : Resources for ML2

FIG.16

Bitmap for frequency domain resource allocation for CORESET
(frequencyDomainResources)

Case 1

⊠ : Resources for ML1        ▭ : Resources for ML2

# FIG.17

monitoringSymbolsWithinSlot

slot

duration

Monitoring occasions #1

CORESET #1

Monitoring occasions #2

CORESET #1

(a)

monitoringSymbolsWithinSlot

slot

duration

K

ML1    ML2

CORESET #1

Monitoring
occasions #1

K

ML1    ML2

CORESET #1

Monitoring
occasions #2

(b)

FIG.18

## FIG.19

monitoringSymbolsWithinSlot

slot n    slot n+1

duration

K    ML1    ML2

CORESET #1

Monitoring
occasions #1

K    ML1    ML2    ?

CORESET #1

Monitoring
occasions #2

# FIG.20

# FIG.21

monitoringSymbolsWithinSlot

(a)

(b)

EP 4 132 181 A1

FIG.22

FIG.23

FIG.24

FIG.25

(a)

(b)

FIG.26

slot n

K

ML1

ML2

SSB

Monitoring
occasions #1

(a)

slot n

K

ML1

SSB

ML2

Monitoring
occasions #1

(b)

EP 4 132 181 A1

# FIG.27

| CCE 인덱스 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| AL 1 | | | | | | 5 | | | | | | | | 6 | | | | | | | 7 | | | | | | | | 0 | | | | | | | 1 | | | | | | | | 2 | | | | | | | 3 | | | | | | | | 4 | |
| AL 2 | | | 1 | 1 | | | | | | | 2 | 2 | | | | | | | 3 | 3 | | | | | | | 4 | 4 | | | | | | | 5 | 5 | | | | | | | 6 | 6 | | | | | 7 | 7 | | | | | | | 0 | 0 | | |
| AL 4 | | | | 2 | 2 | 2 | 2 | | | | | 3 | 3 | 3 | 3 | | | | | 4 | 4 | 4 | 4 | | | | | 5 | 5 | 5 | 5 | | | | | 6 | 6 | 6 | 6 | | | | | 7 | 7 | 7 | 7 | | | | | 0 | 0 | 0 | 0 | 1 | 1 | 1 | 1 | |
| AL 8 | 0 | 0 | 0 | 0 | 0 | 0 | 0 | 0 | 1 | 1 | 1 | 1 | 1 | 1 | 1 | 1 | 2 | 2 | 2 | 2 | 2 | 2 | 2 | 2 | 3 | 3 | 3 | 3 | 3 | 3 | 3 | 3 | | | | | | | | | 4 | 4 | 4 | 4 | 4 | 4 | 4 | 4 | 5 | 5 | 5 | 5 | 5 | 5 | 5 | 5 | | | | |
| AL 16 | 2 | 2 | 2 | 2 | 2 | 2 | 2 | 2 | 2 | 2 | 2 | 2 | 2 | 2 | 2 | 2 | 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 1 | 1 | 1 | 1 | 1 | 1 | 1 | | | | | | | | | | | | |

FIG.28

| CCE 인덱스 | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 |
|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|---|
| AL 1 | 0 | | | | | | | | 4 | | | | | | | | 1 | | | | | | | | 5 | | | | | | | | 2 | | | | | | | | 6 | | | | | | | | 3 | | | | | | | | 7 | | | |
| AL 2 | 0 | 0 | | | | | | | 4 | 4 | | | | | | | 1 | 1 | | | | | | | 5 | 5 | | | | | | | 2 | 2 | | | | | | | 6 | 6 | | | | | | | 3 | 3 | | | | | | | 7 | 7 | | |
| AL 4 | 0 | 0 | 0 | 0 | | | | | 4 | 4 | 4 | 4 | | | | | 1 | 1 | 1 | 1 | | | | | 5 | 5 | 5 | 5 | | | | | 2 | 2 | 2 | 2 | | | | | 6 | 6 | 6 | 6 | | | | | 3 | 3 | 3 | 3 | | | | | 7 | 7 | 7 | 7 |
| AL 8 | 0 | 0 | 0 | 0 | 0 | 0 | 0 | 0 | 3 | 3 | 3 | 3 | 3 | 3 | 3 | 3 | 1 | 1 | 1 | 1 | 1 | 1 | 1 | 1 | 4 | 4 | 4 | 4 | 4 | 4 | 4 | 4 | 2 | 2 | 2 | 2 | 2 | 2 | 2 | 2 | 5 | 5 | 5 | 5 | 5 | 5 | 5 | 5 | | | | | | | | | | | | |
| AL 16 | 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 | 1 | 1 | 1 | 1 | 1 | 1 | 1 | 2 | 2 | 2 | 2 | 2 | 2 | 2 | 2 | 2 | 2 | 2 | 2 | 2 | 2 | 2 | 2 | | | | | | | | | | | | |

68

FIG.29

FIG.30

| Receive DCI on PDCCH | ~S3001 |

| Receive PDSCH | ~S3002 |

| Transmit ACK information on PUCCH | ~S3003 |

FIG.31

| Transmit DCI on PDCCH | ~S3101 |

↓

| Transmit PDSCH | ~S3102 |

↓

| Receive ACK information on PUCCH | ~S3103 |

EP 4 132 181 A1

# FIG.32

## INTERNATIONAL SEARCH REPORT

| International application No. |
| --- |
| **PCT/KR2021/003758** |

### A.   CLASSIFICATION OF SUBJECT MATTER

**H04W 72/12**(2009.01)i; **H04W 72/04**(2009.01)i; **H04W 72/10**(2009.01)i; **H04L 5/00**(2006.01)i; **H04B 17/373**(2014.01)i; **H04B 7/024**(2017.01)i; **H04B 7/06**(2006.01)i

According to International Patent Classification (IPC) or to both national classification and IPC

### B.   FIELDS SEARCHED

Minimum documentation searched (classification system followed by classification symbols)

H04W 72/12(2009.01); H04L 1/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PDCCH, ML, CORESET, SS

### C.   DOCUMENTS CONSIDERED TO BE RELEVANT

| Category* | Citation of document, with indication, where appropriate, of the relevant passages | Relevant to claim No. |
| --- | --- | --- |
| Y<br>A | ZTE. Outcome of email thread[100e-NR-2step-RACH-Procedure-04]. R1-2001374, 3GPP TSG RAN WG1 Meeting #100 e-meeting. 04 March 2020.<br>See section 3.1. | 1,7-10,17-21<br>2-6,11-16 |
| Y | LG ELECTRONICS. Summary of email discussion[100e-NR-unlic-NRU-WideBand-01] on CORESET and SS set configuration for NR-U wideband operation. R1-2001358, 3GPP TSG RAN WG1 #100 e-meeting. 05 March 2020.<br>See sections 1, 2.2 and 3. | 1,7-10,17-21 |
| Y | LG ELECTRONICS. Summary#2 on maintenance of wide-band operation for NR-U. R1-2001163, 3GPP TSG RAN WG1 #100 e-meeting. 22 February 2020.<br>See section 3.3. | 9 |
| A | NTT DOCOMO, INC. PUCCH resource determination for HARQ-ACK for SPS PDSCH. R1-2000924, 3GPP TSG RAN WG1 #100 e-meeting. 14 February 2020.<br>See section 2. | 1-21 |

☑ Further documents are listed in the continuation of Box C.     ☑ See patent family annex.

| | |
| --- | --- |
| *      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |
| Date of the actual completion of the international search<br><br>**18 June 2021** | Date of mailing of the international search report<br><br>**21 June 2021** |
| Name and mailing address of the ISA/KR<br><br>**Korean Intellectual Property Office**<br>**Government Complex-Daejeon Building 4, 189 Cheongsa-**<br>**ro, Seo-gu, Daejeon 35208** | Authorized officer |
| Facsimile No. **+82-42-481-8578** | Telephone No. |

Form PCT/ISA/210 (second sheet) (July 2019)

**INTERNATIONAL SEARCH REPORT**

International application No.

**PCT/KR2021/003758**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2019-0104985 A (LG ELECTRONICS INC.) 11 September 2019 (2019-09-11)<br>See paragraphs [0006]-[0018]; and claims 1-13. | 1-21 |

Form PCT/ISA/210 (second sheet) (July 2019)

## INTERNATIONAL SEARCH REPORT
### Information on patent family members

International application No.

**PCT/KR2021/003758**

| Patent document cited in search report | | | Publication date (day/month/year) | Patent family member(s) | | | Publication date (day/month/year) |
|---|---|---|---|---|---|---|---|
| KR | 10-2019-0104985 | A | 11 September 2019 | CN | 111034113 | A | 17 April 2020 |
| | | | | EP | 3588836 | A1 | 01 January 2020 |
| | | | | JP | 2020-515132 | A | 21 May 2020 |
| | | | | US | 2020-0162207 | A1 | 21 May 2020 |
| | | | | WO | 2019-168338 | A1 | 06 September 2019 |

Form PCT/ISA/210 (patent family annex) (July 2019)